# EUROPEAN PATENT APPLICATION

(11) **EP 4 645 951 A1**
(43) Date of publication of application: **05.11.2025**
(21) Application number: 23910335.1
(22) Date of filing: 21.12.2023
(51) Int. Cl.: H04W 36/00

(54) **COMMUNICATION METHOD AND COMMUNICATION APPARATUS**

(30) Priority: 30.12.2022 CN 202211734347
(71) Applicant: Huawei Technologies Co., Ltd., Shenzhen, Guangdong 518129 (CN)
(72) Inventor: YOU, Chunhua, Shenzhen, Guangdong 518129 (CN); GU, Zhifang, Shenzhen, Guangdong 518129 (CN); FAN, Qiang, Shenzhen, Guangdong 518129 (CN)
(74) Representative: Grünecker Patent- und Rechtsanwälte PartG mbB
(86) International application number: PCT/CN2023/140595
(87) International publication number: WO 2024/140408

(57) **Abstract**

This application provides a communication method and a communication apparatus, to advance an obtaining occasion of a TA of a candidate cell to time before handover. In this way, before a handover to the candidate cell, a service of a terminal can be transmitted via a source DU, and after the handover to the candidate cell, the TA value that is of the candidate cell and that is obtained in advance can be directly used to continue to transmit the service of the terminal, thereby avoiding service interruption.

## Description

This application claims priority to Chinese Patent Application 202211734347.X, filed with the China National Intellectual Property Administration on December 30, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Currently, in an intra-base station inter (distributed unit, DU) cell handover procedure, after receiving a handover command, a terminal needs to preferentially obtain a timing advance (timing advance, TA) used for uplink transmission. In this process, the terminal cannot transmit service data. Therefore, in the current intra-base station inter-DU cell handover procedure, service interruption occurs, affecting user experience.

### SUMMARY

This application provides a communication method and a communication apparatus, to help reduce service interruption, thereby improving user experience.

According to a first aspect, a communication method is provided. The method may be performed by a source DU, or may be performed by a module or a unit (for example, a chip or a circuit) in the source DU. For ease of description, the source DU is used as a unified name below.

The method includes: The source DU receives a first random access configuration and a second random access configuration of a first candidate cell from a central unit (central unit, CU), where the first random access configuration indicates a common resource for random access of the first candidate cell, and the second random access configuration indicates a dedicated resource for random access of the first candidate cell; the source DU sends the first random access configuration to a terminal; the source DU sends first downlink control information to the terminal based on the second random access configuration, where the first downlink control information is used to trigger the terminal to initiate random access to the first candidate cell; and the source DU sends a handover command to the terminal after sending the first downlink control information, where the handover command indicates the terminal to be handed over to the first candidate cell, and the first candidate cell is a cell of a target DU.

In the foregoing method, before the source DU sends the handover command to the terminal, the source DU may obtain the first random access configuration and the second random access configuration of the first candidate cell, and send, to the terminal, the first downlink control information used to trigger the terminal to initiate random access to the first candidate cell, so that a TA value of the first candidate cell can be obtained before the terminal is handed over to the first candidate cell. In this way, an obtaining occasion of the TA of the first candidate cell may be advanced to time before handover. Before the terminal is handed over to the first candidate cell, a service of the terminal can be transmitted via the source DU, and after the terminal is handed over to the first candidate cell, the TA value that is of the first candidate cell and that is obtained in advance can be directly used to continue to transmit the service of the terminal, thereby avoiding service interruption.

With reference to the first aspect, in a possible implementation, the method further includes: when the source DU receives no notification information from the CU within preset duration, and/or when the source DU receives first information from the CU, the source DU sends second downlink control information to the terminal, where the notification information notifies that a timing advance TA of the first candidate cell is obtained or notifies that a random access preamble of the first candidate cell is received; the first information indicates that the timing advance TA of the first candidate cell is invalid, or the first information is used to request to send the second downlink control information; and the second downlink control information is used to trigger the terminal to initiate random access to the first candidate cell.

In the foregoing method, if no notification information that notifies that the TA of the first candidate cell is obtained or notifies that the random access preamble of the first candidate cell is received is received within the preset duration, the source DU may resend the downlink control information used to trigger the terminal to initiate random access to the first candidate cell, to help obtain the TA value of the first candidate cell. If the TA of the first candidate cell is invalid, the source DU may also resend the downlink control information used to trigger the terminal to initiate random access to the first candidate cell, to re-obtain the TA value of the first candidate cell. This helps maintain accuracy of the TA value of the first candidate cell.

With reference to the first aspect or any implementation of the first aspect, in another possible implementation, the method further includes: The source DU receives notification information from the CU, where the notification information indicates that a TA of the first candidate cell is obtained or notifies that a random access preamble of the first candidate cell is received.

In the foregoing method, when the TA of the first candidate cell is successfully obtained or the random access preamble of the first candidate cell is received, the target DU may send a notification to the source DU, so that the source DU may stop sending the first downlink control information. This helps avoid a waste of resources.

With reference to the first aspect or any implementation of the first aspect, in another possible implementation, the notification information includes the TA value of the first candidate cell, and the handover command includes the TA value of the first candidate cell.

In the foregoing method, the source DU may obtain the TA value of the first candidate cell through the notification information. In this way, when sending the handover command to the terminal, the source DU may send the TA value to the terminal through the handover command.

With reference to the first aspect or any implementation of the first aspect, in another possible implementation, the method further includes: The source DU receives a first neighboring cell measurement report from the terminal; and that the source DU sends the first downlink control information to the terminal based on the second random access configuration includes: The source DU sends the first downlink control information to the terminal based on the second random access configuration and the first neighboring cell measurement report.

With reference to the first aspect or any implementation of the first aspect, in another possible implementation, the first downlink control information includes an identifier of a cell group to which the first candidate cell belongs and an identifier of the first candidate cell in the cell group.

With reference to the first aspect or any implementation of the first aspect, in another possible implementation, the first downlink control information further includes indication information of a first dedicated resource in the dedicated resource.

In other words, the source DU may trigger the terminal to initiate contention-free random access to the first candidate cell.

According to a second aspect, a communication method is provided. The method may be performed by a target DU, or may be performed by a module or a unit (for example, a chip or a circuit) in the target DU. For ease of description, the target DU is used as a unified name below. For beneficial effect of the second aspect and the implementations of the second aspect, refer to the first aspect and the implementations of the first aspect. Details are not described again.

The method includes: The target DU receives an identifier of a first candidate cell from a central unit CU, where the first candidate cell is a cell of the target DU; the target DU sends, to the CU, a first random access configuration and a second random access configuration of the first candidate cell, where the first random access configuration indicates a common resource for random access of the first candidate cell, and the second random access configuration indicates a dedicated resource for random access of the first candidate cell; the target DU receives a random access preamble from a terminal in the first candidate cell; and the target DU determines a timing advance TA value of the first candidate cell based on the random access preamble.

With reference to the second aspect, in a possible implementation, the method further includes: The target DU sends notification information to the CU, where the notification information notifies that the TA value of the first candidate cell is obtained or notifies that the random access preamble of the first candidate cell is received.

With reference to the second aspect or any implementation of the second aspect, in another possible implementation, the notification information includes the TA value of the first candidate cell.

With reference to the second aspect or any implementation of the second aspect, in another possible implementation, the method further includes: The target DU sends the TA value of the first candidate cell to the terminal.

With reference to the second aspect or any implementation of the second aspect, in another possible implementation, that the target DU sends the TA value of the first candidate cell to the terminal includes: The target DU sends a random access response message to the terminal, where the random access response message includes the TA value of the first candidate cell.

With reference to the second aspect or any implementation of the second aspect, in another possible implementation, the method further includes: when a timer used to control the TA value of the first candidate cell to be valid expires, the target DU sends first information to the CU, where the first information indicates that the TA of the first candidate cell is invalid or is used to request to send second downlink control information, and the second downlink control information is used to trigger the terminal to initiate random access to the first candidate cell.

With reference to the second aspect or any implementation of the second aspect, in another possible implementation, the method further includes: The target DU receives second information from the terminal, where the second information indicates to obtain the TA value of the first candidate cell in advance.

According to a third aspect, a communication method is provided. The method may be performed by a CU, or may be performed by a module or a unit (for example, a chip or a circuit) in the CU. For ease of description, the CU is used as a unified name below. For beneficial effect of the third aspect and the implementations of the third aspect, refer to the first aspect and the implementations of the first aspect. Details are not described again.

The method includes: The CU receives a second neighboring cell measurement report from a terminal; the CU determines a first candidate cell based on the second neighboring cell measurement report; the CU sends an identifier of the first candidate cell to a target distributed unit DU; the CU receives a first random access configuration and a second random access configuration of the first candidate cell from the target DU, where the first random access configuration indicates a common resource for random access of the first candidate cell, and the second random access configuration indicates a dedicated resource for random access of the first candidate cell; and the CU sends the first random access configuration and the second random access configuration of the first candidate cell to a source DU.

With reference to the third aspect, in a possible implementation, the method further includes: The CU receives notification information from the target DU, where the notification information notifies that a timing advance TA value of the first candidate cell is obtained or notifies that a random access preamble of the first candidate cell is received; and the CU sends the notification information to the source DU.

With reference to the third aspect or any implementation of the third aspect, in another possible implementation, the notification information includes the TA value of the first candidate cell.

With reference to the third aspect or any implementation of the third aspect, in another possible implementation, the method further includes: The CU receives first information from the target DU, where the first information indicates that the TA of the first candidate cell is invalid or is used to request to send second downlink control information, and the second downlink control information is used to trigger the terminal to initiate random access to the first candidate cell; and the CU sends the first information to the source DU.

According to a fourth aspect, a communication method is provided. The method may be performed by a terminal, or may be performed by a module or a unit (for example, a chip or a circuit) in the terminal. For ease of description, the terminal is used as a unified name below. For beneficial effect of the fourth aspect and the implementations of the fourth aspect, refer to the first aspect and the implementations of the first aspect. Details are not described again.

The method includes: The terminal receives a first random access configuration of a first candidate cell from a source DU, where the first random access configuration indicates a common resource for random access of the first candidate cell; the terminal receives first downlink control information from the source DU, where the first downlink control information is used to trigger the terminal to initiate random access to the first candidate cell, and the first downlink control information includes an identifier of a cell group to which the first candidate cell belongs and an identifier of the first candidate cell in the cell group; the terminal sends a random access preamble in the first candidate cell based on the first random access configuration and the first downlink control information; the terminal receives a TA value of the first candidate cell; and the terminal receives a handover command from the source DU, where the handover command indicates the terminal to be handed over to the first candidate cell, and the first candidate cell is a cell of a target DU.

With reference to the fourth aspect or any implementation of the fourth aspect, in another possible implementation, that the terminal receives the timing advance TA value of the first candidate cell includes: The terminal receives a random access response message from the target DU, where the random access response message includes the TA value of the first candidate cell.

With reference to the fourth aspect, in a possible implementation, the first downlink control information further includes indication information of a first dedicated resource in a dedicated resource for random access of the first candidate cell.

With reference to the fourth aspect or any implementation of the fourth aspect, in another possible implementation, the method further includes: The terminal sends second information to the target DU, where the second information indicates to obtain the TA value of the first candidate cell in advance.

According to a fifth aspect, a communication method is provided. The method may be performed by a terminal, or may be performed by a module or a unit (for example, a chip or a circuit) in the terminal. For ease of description, the terminal is used as a unified name below. For beneficial effect of the fifth aspect and the implementations of the fifth aspect, refer to the first aspect and the implementations of the first aspect. Details are not described again.

The method includes: The terminal receives a first random access configuration of a first candidate cell from a source DU, where the first random access configuration indicates a common resource for random access of the first candidate cell; the terminal receives first downlink control information from the source DU, where the first downlink control information is used to trigger the terminal to initiate random access to the first candidate cell, and the first downlink control information includes an identifier of a cell group to which the first candidate cell belongs and an identifier of the first candidate cell in the cell group; the terminal sends a random access preamble in the first candidate cell based on the first random access configuration and the first downlink control information; and the terminal receives a handover command of the source DU, where the handover command indicates the terminal to be handed over to the first candidate cell, the handover command includes a TA value of the first candidate cell, and the first candidate cell is a cell of a target DU.

With reference to the fifth aspect, in a possible implementation, the first downlink control information further includes indication information of a first dedicated resource in a dedicated resource for random access of the first candidate cell.

With reference to the fifth aspect or any implementation of the fifth aspect, in another possible implementation, the method further includes: The terminal sends second information to the target DU, where the second information indicates to obtain the TA value of the first candidate cell in advance.

According to a sixth aspect, a communication method is provided. The method may be performed by a terminal, or may be performed by a module or a unit (for example, a chip or a circuit) in the terminal. For ease of description, the terminal is used as a unified name below.

The method includes: The terminal sends a random access preamble to a network device on a first random access resource corresponding to a first timing advance group (timing advance group, TAG); the terminal receives a random access response message from the network device; the terminal sends a message 3 to the network device, where the message 3 includes an identifier of the terminal; when the terminal receives the identifier through a first physical downlink control channel (physical downlink control channel, PDCCH) corresponding to the first TAG, the terminal determines that random access is completed; and when the terminal receives the identifier through a second PDCCH corresponding to a second TAG, the terminal continues to listen to a message 4, where the first TAG and the second TAG are applicable to a same cell.

In the foregoing method, the terminal considers that random access for the first TAG ends only when receiving, on the first PDDCH corresponding to the first TAG, the message including the identifier of the terminal, and does not consider that random access for the first TAG ends when receiving, on another PDCCH, the message including the identifier of the terminal, and therefore continues to listen to the message 4. In this way, different PDCCHs including identifiers of the terminal may be distinguished, to avoid misjudgment of random access completion.

With reference to the sixth aspect, in a possible implementation, when the terminal has completed random access for the second TAG, the method further includes: when random access of the terminal for the first TAG fails, the terminal skips initiating a re-establishment process.

In the foregoing method, because the terminal has performed access for the second TAG, when random access for the first TAG fails, the re-establishment process may not be triggered.

With reference to the sixth aspect or any implementation of the sixth aspect, in another possible implementation, the method further includes: The terminal receives a configuration message from the network device, where the configuration message indicates the first PDCCH and the first random access resource that correspond to the first TAG, and the second PDCCH and a second random access resource that correspond to the second TAG.

With reference to the sixth aspect or any implementation of the sixth aspect, in another possible implementation, the configuration message includes: a correspondence between the first random access resource and the first PDCCH, and/or a correspondence between a first synchronization signal/physical broadcast channel block (synchronization signal/physical broadcast channel block, SS/PBCH block or SSB) and the first PDCCH, where the first SSB corresponds to the first random access resource; and a correspondence between the second random access resource and the second PDCCH, and/or a correspondence between a second SSB and the second PDCCH, where the second SSB corresponds to the second random access resource.

With reference to the sixth aspect or any implementation of the sixth aspect, in another possible implementation, the first PDCCH includes a first control resource set (control resource set, CORESET) pool and/or a first common search space (common search space, CSS); and/or the second PDCCH includes a second CORESET pool and/or a second CSS.

According to a seventh aspect, a communication method is provided. The method may be performed by a network device, or may be performed by a module or a unit (for example, a chip or a circuit) in the network device. For ease of description, the network device is used as a unified name below. For beneficial effect of the seventh aspect and the implementations of the seventh aspect, refer to the first aspect and the implementations of the sixth aspect. Details are not described again.

The method includes: The network device receives a random access preamble from a terminal on a first random access resource corresponding to a first timing advance group TAG; the network device sends a random access response message to the terminal; the network device receives a message 3 from the terminal, where the message 3 includes an identifier of the terminal; and the network device sends the identifier on a first physical downlink control channel PDCCH corresponding to the first TAG.

With reference to the seventh aspect, in a possible implementation, the method further includes: The network device sends a configuration message to the terminal, where the configuration message indicates the first PDCCH and the first random access resource that correspond to the first TAG, and a second PDCCH and a second random access resource that correspond to a second TAG, and the first TAG and the second TAG are applicable to a same cell.

With reference to the seventh aspect or any implementation of the seventh aspect, in another possible implementation, the configuration message includes: a correspondence between the first random access resource and the first PDCCH, and/or a correspondence between a first SSB and the first PDCCH, where the first SSB corresponds to the first random access resource; and a correspondence between the second random access resource and the second PDCCH, and/or a correspondence between a second SSB and the second PDCCH, where the second SSB corresponds to the second random access resource.

With reference to the seventh aspect or any implementation of the seventh aspect, in another possible implementation, the first PDCCH includes a first CORESET pool and/or a first CSS; and/or the second PDCCH includes a second CORESET pool and/or a second CSS.

According to an eighth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a source DU, a target DU, a CU, a terminal, or a network device. When the apparatus is the source DU, the target DU, the CU, the terminal, or the network device, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the source DU, the target DU, the CU, the terminal, or the network device. When the apparatus is the chip, the chip system, or the circuit used in the source DU, the target DU, the CU, the terminal, or the network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a ninth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a source DU, a target DU, a CU, a terminal, or a network device.

In another implementation, the apparatus is a chip, a chip system, or a circuit used in the source DU, the target DU, the CU, the terminal, or the network device.

According to a tenth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to an eleventh aspect, a processor is provided, configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to a twelfth aspect, a computer-readable storage medium is provided. The computer-readable medium stores program code to be executed by a device, and the program code is used to perform the method provided in any one of the foregoing aspects or the implementations of the foregoing aspects.

According to a thirteenth aspect, a computer program product including instructions is provided. When the computer program product runs on a computer, the computer is enabled to perform the method provided in any one of the foregoing aspects or the implementations of the foregoing aspects.

According to a fourteenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a number of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to a fifteenth aspect, a computer program is provided. When the computer program is run on a computer, the method provided in any one of the foregoing aspects or the implementations of the foregoing aspects is performed.

According to a sixteenth aspect, a communication system is provided, including one or more of a source DU, a target DU, a CU, a terminal, or a network device.

### BRIEF DESCRIPTION OF DRAWINGS

FIG. 1 shows an architecture of a system applicable to a method according to an embodiment of this application;
FIG. 2 is a diagram of contention-based random access;
FIG. 3 is a diagram of contention-free random access;
FIG. 4 is a schematic flowchart of inter-gNodeB-DU handover;
FIG. 5 is a schematic flowchart of a communication method 500 according to this application;
FIG. 6 shows a specific implementation of the method 500;
FIG. 7 shows another specific implementation of the method 500;
FIG. 8 is a schematic flowchart of a communication method 800 according to this application;
FIG. 9 shows a specific implementation of the method 800;
FIG. 10 is a diagram of a structure of an apparatus according to an embodiment of this application; and
FIG. 11 is a diagram of another structure of an apparatus according to an embodiment of this application.

### DESCRIPTION OF EMBODIMENTS

For ease of understanding embodiments of this application, before embodiments of this application are described, the following descriptions are first provided.

In this application, "indicating" or "indicate" may include a direct indication and an indirect indication, or "indicating" or "indicate" may be an explicit indication and/or an implicit indication. For example, when a piece of indication information is described as indicating information I, the indication information may directly indicate I or indirectly indicate I, but it does not necessarily indicate that the indication information carries I. For another example, the implicit indication may be based on a location and/or a resource used for transmission; and the explicit indication may be based on one or more parameters, and/or one or more indexes, and/or one or more bit patterns represented by the explicit indication.

Definitions listed for many features in this application are merely used to explain functions of the features by using examples. For detailed content of the definitions, refer to a conventional technology.

In the following embodiments, first, second, third, fourth, and various numbers are merely used for differentiation for ease of description, but are not used to limit the scope of embodiments of this application. For example, different network devices and different messages are distinguished.

"Predefinition" may be implemented by prestoring, in a device, corresponding code, a table, or another manner that may indicate related information. A specific implementation is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, words such as "example", "for example", "such as", and "in an (another) example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

The terms "include", "have", and their variants all mean "include but are not limited to", unless otherwise specifically emphasized in another manner.

"At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

In embodiments of this application, related descriptions about sending a message, information, or data by a network element A to a network element B, and receiving, by the network element B, the message, the information, or the data from the network element A are intended to describe a network element to which the message, the information, or the data is to be sent. Whether the message, the information, or the data is directly sent or indirectly sent via another network element is not limited.

In embodiments of this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, an evolved system after 5G like a 6th generation (6th generation, 6G) system, or non-terrestrial network (non-terrestrial network, NTN) systems such as an inter-satellite communication system and a satellite communication system. The technical solutions in embodiments of this application may be further applicable to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

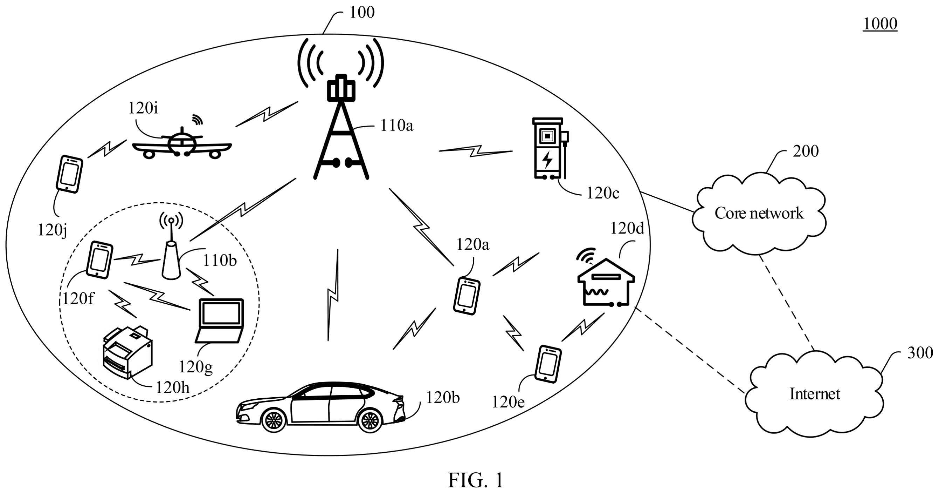

For example, FIG. 1 is an architecture of a system applicable to a method according to an embodiment of this application. As shown in FIG. 1, a communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open RAN (open RAN, O-RAN, or ORAN) or a cloud radio access network (cloud radio access network, CRAN). Alternatively, the RAN 100 may be a communication system that integrates the foregoing two or more systems.

Alternatively, the RAN node 110 may be sometimes referred to as an access network device, a RAN entity, an access node, or the like, and forms a part of a communication system, to help a terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1 may be a helicopter or an unmanned aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved eNodeB (evolved NodeB, eNodeB), an access point (access point, AP), a transmission reception point (transmission reception point, TRP), a next generation base station (next generation base station, gNB), a next generation base station in a 6th generation (6th generation, 6G) mobile communication system, an access node in a wireless fidelity (wireless fidelity, Wi-Fi) system, an access node in a base station in a future mobile communication system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, the access network device in a vehicle to everything (vehicle to everything, V2X) technology may be a road side unit (road side unit, RSU).

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

The terminal may be a device having a wireless transceiver function. The terminal, for example, may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, personal digital processing (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

To facilitate understanding of embodiments of this application, terms used in this application are first briefly described.

### 1. Physical downlink control channel

The physical downlink control channel (physical downlink control channel, PDCCH) is an important channel. A network side sends downlink control information (downlink control information, DCI) to a terminal on the PDCCH based on a PDCCH resource configuration, to indicate the terminal to perform corresponding uplink (uplink, UL) scheduling or downlink (downlink, DL) scheduling. If the DCI indicates related information of a physical downlink shared channel (physical downlink shared channel, PDSCH), the terminal receives downlink data on the PDSCH based on the DCI; or if the DCI indicates related information of a physical uplink shared channel (physical uplink shared channel, PUSCH), the terminal sends uplink data on the PUSCH based on the DCI.

### 2. Bandwidth part, control resource set, and search space

Because a carrier bandwidth is large, a concept of the bandwidth part (bandwidth part, BWP) is introduced. Specifically, BWPs of different sizes may be allocated to different services. Based on the BWP, the control resource set (control resource set, CORESET) and the search space (SearchSpace) are further introduced, to determine a specific time-frequency domain resource for receiving data. A network side configures a plurality of CORESETs and a plurality of SearchSpaces in the BWP, and then determines a time-frequency resource for different usages in a manner of pairing one CORESET and one SearchSpace. For example, DCI-Format0_0/1_0 may be checked by using a time-frequency domain resource determined by using a pair of CORESET and SearchSpace, and then DCI-Format0_1/1_1 is checked by using a time-frequency domain resource determined by using another pair of CORESET and SearchSpace.

Simply speaking, the CORESET describes frequency domain resource distribution, and the SearchSpace describes time domain resource distribution. The specific time-frequency domain resource can be determined by pairing CORESET and SearchSpace.

### 3. TA and TAG

The timing advance (timing advance, TA) is generally used for uplink transmission of a terminal, and means that the terminal sends uplink data in advance by TA time according to a corresponding instruction. Specifically, to enable the uplink data of the terminal to arrive at a network device at expected time, and estimate a transmission delay caused by a distance, the network device may calculate a TA value of the terminal based on a random access preamble sent by the terminal, and notify the terminal of the obtained TA value by using a timing advance command (timing advance command, TAC).

For the timing advance group (timing advance group, TAG), one TAG may correspond to one or more serving cells, and one TAG may correspond to one TRP. In other words, different serving cells may transmit data via a same TRP, and the one or more serving cells have a same TA value. In this application, one serving cell may correspond to a plurality of TRPs, that is, correspond to a plurality of TAGs, that is, correspond to a plurality of TAs. For example, a cell 1 may transmit data via a TRP 1, and may transmit data via a TRP 2. In this case, the serving cell may correspond to two TAs.

### 4. Random access

Random access (random access or a random access procedure) is a mandatory process of establishing a radio link between a terminal and a network side. Data exchange can be normally performed between the network side and the terminal only after random access is completed.

The following three basic functions may be implemented through random access.
(1) The terminal obtains uplink synchronization with the network side, that is, the terminal obtains a TA value. Once uplink out-of-synchronization occurs, the terminal can transmit data only on a physical random access channel (physical random access channel, PRACH).
(2) The terminal applies for an uplink grant (UL grant) resource, used to send a message 3 (message 3, Msg 3).
(3) A unique cell radio network temporary identifier (cell radio network temporary identifier, C-RNTI) is allocated to the terminal.

Random access can be classified into contention-based random access (contention-based random access, CBRA) and contention-free random access (contention-free random access, CFRA) based on different service triggering modes.

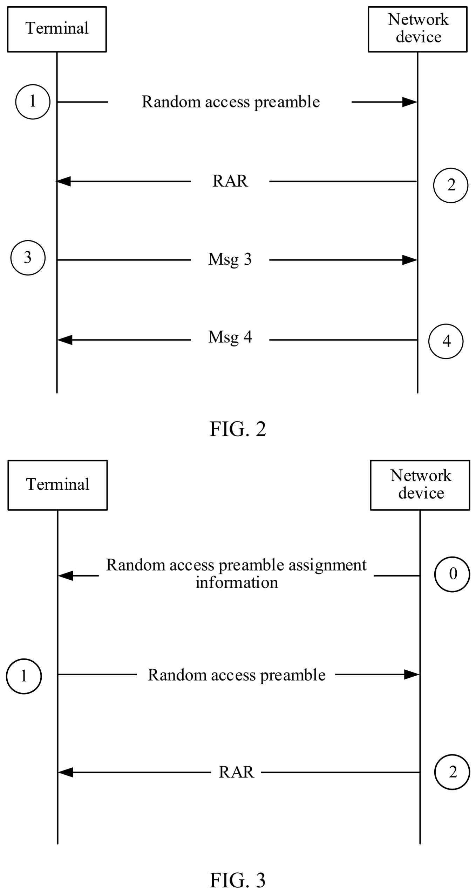

FIG. 2 is a diagram of contention-based random access.

The "contention" means that a conflict may occur between different terminals.

Step 0: Each terminal listens to system information, and obtains configuration information of a PRACH of a cell.

For example, in NR, the terminal obtains the configuration information of the PRACH of the cell by listening to a system information block 1 (system information block 1, SIB 1).

For another example, in LTE, the terminal obtains the configuration information of the PRACH of the cell by listening to a system information block 2 (system information block 2, SIB 2).

Step 0 is not shown in FIG. 2.

Step 1: A plurality of terminals send a same preamble sequence to a network device in a same subframe by using a same PRACH resource, to request a resource grant of the network device.

In this case, the network device cannot know which terminal sends the request, and a conflict may occur.

Step 2: The network device delivers a random access response (random access response, RAR) message.

The RAR includes a TA value and a UL grant used to transmit a message 3. Each terminal may receive the RAR delivered by the network device.

Step 3: The plurality of terminals that receive the RAR send unique messages that are only related to the plurality of terminals, that is, messages 3, to the network device at an occasion indicated by the UL grant.

Step 4: After receiving the messages 3 sent by the plurality of terminals, the network device determines which terminal succeeds in contention, and sends a message 4 (message 4, Msg 4) to the terminal, to determine which terminal currently performs successful access. This mechanism is a contention resolution mechanism.

FIG. 3 is a diagram of contention-free random access.

Step 0: A network device sends random access preamble assignment (random access preamble assignment) information to a terminal through dedicated signaling.

Specifically, the network device sends, to the terminal, a preamble (referred to as a contention-free preamble for short below) and a PRACH resource that are required for contention-free random access.

If a preamble resource is insufficient in this case, the network device notifies the terminal to initiate contention-based random access. In a manner, a preamble index (preamble index) in a PDCCH format 1a is set to all 0s. In this way, when the preamble index obtained through decoding by the terminal is all 0s, the terminal performs contention-based random access.

In a handover scenario, the contention-free preamble is sent to the terminal through a handover command.

Step 1: The terminal sends the contention-free preamble to the network device.

Step 2: The network device feeds back an RAR to the terminal. The RAR includes a TA value.

After receiving the RAR, the terminal determines that random access succeeds.

### 5. Inter-DU handover

Inter-gNodeB-DU handover is used as an example. A TA value in a handover process is obtained as follows.

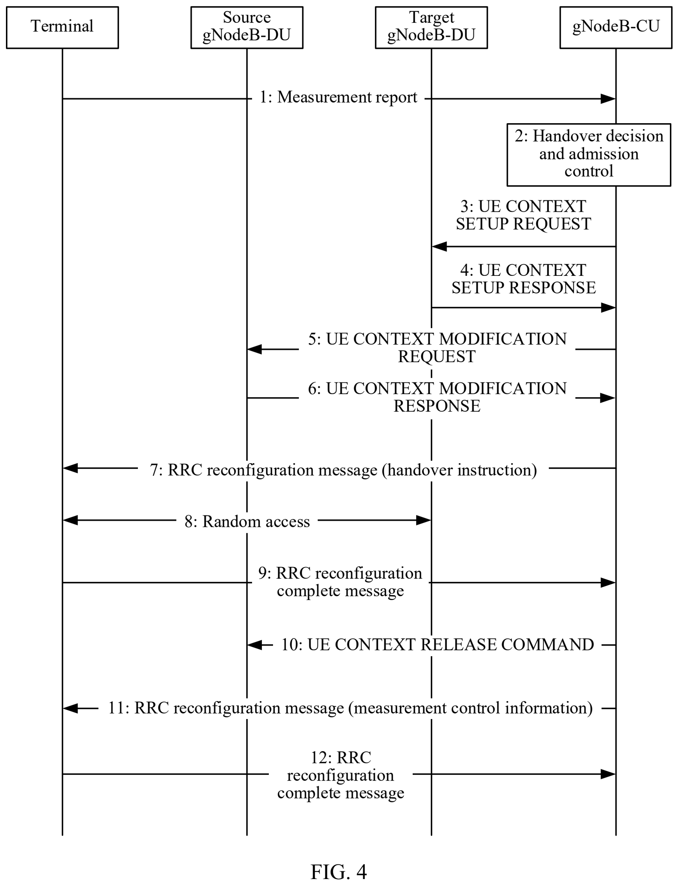

FIG. 4 is a schematic flowchart of inter-gNodeB-DU handover.

Step 1: A terminal reports a measurement report (measurement report) to a gNodeB-CU, or the gNodeB-CU receives the measurement report from the terminal.

Specifically, the terminal may send the measurement report to a source gNodeB-DU, and then the source gNodeB-DU sends the received measurement report to the gNodeB-CU through an uplink RRC message transfer (UL RRC Message Transfer) message.

Before step 1, the gNodeB-CU may deliver measurement control information to the terminal through a radio resource control (radio resource control, RRC) reconfiguration (RRCReconfiguration) message. After receiving the RRC reconfiguration message, the terminal may return an RRC reconfiguration complete (RRCReconfigurationComplete) message to the gNodeB-CU. The measurement control information may include a measurement object (intra-frequency/inter-frequency), a measurement report configuration, a measurement gap (measurement Gap) configuration, and the like. The terminal may perform cell measurement based on the measurement control information.

Step 2: After receiving the measurement report, the gNodeB-CU may determine, based on a physical cell identifier (physical cell identifier, PCI) carried in the measurement report, that a target cell and a source cell that are used for handover belong to different DUs of a same gNodeB, and start an intra-base station inter-DU handover procedure. The target cell performs admission decision based on a UE context transferred by the source cell.

Step 3: The gNodeB-CU sends a UE context setup request (UE CONTEXT SETUP REQUEST) message to a target gNodeB-DU, to apply for a new user resource for the target cell.

Step 4: If a resource of the target gNodeB-DU is successfully allocated, the target gNodeB-DU returns a UE context setup response (UE CONTEXT SETUP RESPONSE) message to the gNodeB-CU.

Step 5: The gNodeB-CU sends a UE context modification request (UE CONTEXT MODIFICATION REQUEST) message to the source gNodeB-DU, to notify the source gNodeB-DU to deliver a layer 2 (layer 2, L2) scheduling stop indication.

Step 6: The source gNodeB-DU returns a UE context modification response (UE CONTEXT MODIFICATION RESPONSE) message to the gNodeB-CU.

Step 7: After admission succeeds, the gNodeB-CU sends the RRCReconfiguration message to the UE, where the message carries a handover command, including a target frequency used for handover, a PCI, a C-RNTI and a dedicated preamble that are configured for the terminal, and the like.

Step 8: The terminal initiates random access to the target cell of the target gNodeB-DU.

In a manner, the terminal sends a message 1 (message 1, Msg 1) in the target cell of the target gNodeB-DU, where the message 1 carries the dedicated preamble. The target gNodeB-DU returns a message 2 (message 2, Msg 2), namely, an RAR, to the terminal.

Step 9: After random access succeeds, the terminal returns the RRCReconfigurationComplete message to the gNodeB-CU, and the terminal accesses the target cell.

Step 10: The gNodeB-CU sends a UE context release command (UE CONTEXT RELEASE COMMAND) to the source gNodeB-DU. After receiving the message, the source cell of the source gNodeB-DU releases a user that has been handed over.

Step 11: After the terminal is handed over to the target cell, the gNodeB-CU delivers measurement control information of a new cell to the terminal through the RRCReconfiguration message.

Step 12: After receiving the new measurement control delivered by the gNodeB-CU, the terminal returns the RRCReconfigurationComplete message to the gNodeB-CU.

For more detailed descriptions of inter-gNodeB-DU handover, refer to the conventional technology. Details are not described herein again.

It can be learned from the foregoing content that, after receiving the handover command, the terminal needs to obtain the TA value by using the random access process. In this process, the terminal cannot transmit service data, and service interruption occurs, affecting user experience.

For the foregoing problem, this application provides a communication method, to help avoid service interruption, thereby improving user experience.

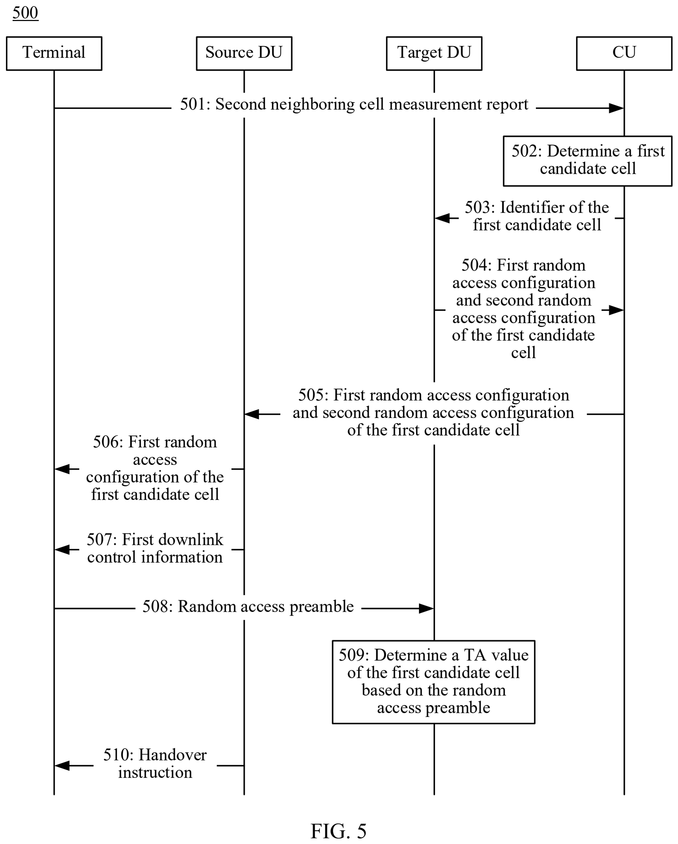

FIG. 5 is a schematic flowchart of a communication method 500 according to this application. The method shown in FIG. 5 may be performed by a terminal, a source DU, a target DU, and a CU, or may be performed by a module or a unit in the terminal, the source DU, the target DU, and the CU. This is not limited in this application. For ease of description, the terminal, the source DU, the target DU, and the CU are used as unified names below. The source DU, the target DU, and the CU belong to a same network device.

The method 500 includes at least a part of the following content.

Step 501: The CU receives a neighboring cell measurement report from the terminal, or the terminal sends the neighboring cell measurement report to the CU.

Because a plurality of neighboring cell measurement reports may exist in the method 500, for differentiation, the neighboring cell measurement report in step 501 is denoted as a second neighboring cell measurement report.

Step 502: The CU determines a first candidate cell based on the second neighboring cell measurement report.

The first candidate cell may be a candidate cell recommended by the CU. The first candidate cell is a cell to which the terminal can be is handed over, to which the terminal is to be handed over, or to which the terminal is about to be handed over.

For example, after receiving the second neighboring cell measurement report, the CU may determine, based on the second neighboring cell measurement report, to prepare for a layer 1/layer 2 triggered mobility (L1/L2 triggered mobility, LTM) configuration. Specifically, for example, the CU may determine, based on the second neighboring cell measurement report, one or more candidate cells recommended to the target DU, where the one or more candidate cells include the first candidate cell.

Step 503: The CU sends an identifier of the first candidate cell to the target DU, or the target DU receives the identifier of the first candidate cell from the CU.

For example, the CU sends the identifier of the first candidate cell to the target DU through a UE context setup request message.

Specifically, the UE context setup request message may include identifiers of one or more candidate cells, and the identifiers of the one or more candidate cells include the identifier of the first candidate cell.

Step 504: The target DU sends a first random access configuration and a second random access configuration of the first candidate cell to the CU, or the CU receives the first random access configuration and the second random access configuration of the first candidate cell from the target DU.

The first random access configuration indicates a common resource for random access of the first candidate cell. The first random access configuration is a cell-level configuration, and is a random access configuration that can be used by different terminals to initiate random access to the first candidate cell. For example, the first random access configuration may include one or more of the following parameters: a random access preamble root sequence or indication information of a random access time-frequency resource.

The second random access configuration indicates a dedicated resource for random access of the first candidate cell. The dedicated resource herein may also be understood as a contention-free random access resource. After a resource in the dedicated resource is allocated to a terminal, the resource is dedicated to the terminal. For example, the second random access configuration may include at least one contention-free random access preamble index. For example, the second random access configuration may include a plurality of SSB indexes of the candidate cell and/or a contention-free random access preamble index corresponding to each SSB index. For another example, the second random access configuration may include one SSB index and/or a contention-free random access preamble index corresponding to the SSB index.

Specifically, the terminal may initiate contention-based random access based on the first random access configuration, and may initiate contention-free random access based on the first random access configuration and the dedicated resource specified by the network device for the terminal based on the second random access configuration.

For example, the target DU may send the first random access configuration and the second random access configuration of the first candidate cell to the CU through a UE context setup response message.

Specifically, after receiving the UE context setup request message, the target DU determines whether to accept the one or more candidate cells in the message as LTM candidate cells, and sends first random access configurations and second random access configurations of the accepted candidate cells to the CU through the UE context setup response message, where the candidate cells accepted by the target DU include the first candidate cell. It should be noted that some candidate cells may have no first random access configuration and no second random access configuration. It should be further noted that first random access configurations of different candidate cells are different and second random access configurations of the different candidate cells are different.

Step 505: The CU sends the first random access configuration and the second random access configuration of the first candidate cell to the source DU, or the source DU receives the first random access configuration and the second random access configuration of the first candidate cell from the CU.

For example, the CU may send the first random access configuration and the second random access configuration of the first candidate cell to the source DU through a UE context modification request message.

Specifically, the CU may send, to the source DU through the UE context modification request message, first random access configurations and second random access configurations of one or more candidate cells accepted by the target DU, where the one or more candidate cells accepted by the target DU include the first candidate cell.

Optionally, the UE context modification request message further includes a cell group identifier of the one or more candidate cells accepted by the target DU. The cell group identifier identifies one cell group, or identifies configurations of a plurality of candidate cells. Cells in one cell group belong to one DU and cannot include cells of a plurality of DUs. The cell group identifier may be allocated by the CU.

Step 506: The source DU sends the first random access configuration of the first candidate cell to the terminal, or the terminal receives the first random access configuration of the first candidate cell from the source DU.

Specifically, the source DU may send, to the terminal, the first random access configurations of the one or more candidate cells received in step 505, where the first random access configurations include the first random access configuration of the first candidate cell.

Step 507: The source DU sends first downlink control information to the terminal, or the terminal receives the first downlink control information from the source DU.

The first downlink control information is used to trigger the terminal to initiate random access to the first candidate cell. The first downlink control information may be carried in a PDCCH order (PDCCH order).

For example, the first downlink control information includes information used to determine the first candidate cell, for example, a cell group identifier of the first candidate cell and an identifier of the first candidate cell in a cell group. In this case, after receiving the first downlink control information, the terminal may determine the first candidate cell based on the information in the first downlink control information, and then initiate contention-based random access to the first candidate cell. For example, when the source DU finds, based on the second random access configuration of the first candidate cell, that there is no dedicated resource, the source DU may determine the first downlink control information used to trigger the terminal to initiate contention-based random access to the first candidate cell.

Optionally, the first downlink control information further includes indication information of a first dedicated resource, and the first dedicated resource is a dedicated resource indicated by the second random access configuration. Optionally, the first dedicated resource may include at least one of an SSB, an identifier of a random access SSB occasion mask (random access SSB occasion mask, RO mask), and a contention-free random access preamble index. The SSB and the identifier of the RO mask may be used to determine a time-frequency resource for sending a contention-free random access preamble, and the contention-free random access preamble index may be used to generate a corresponding random access preamble. In this case, after the terminal receives the first downlink control information, the terminal may initiate contention-free random access to the first candidate cell.

An occasion at which the source DU sends the first downlink control information is not limited in this application. In an example, when the source DU detects that signal quality of a serving cell of the terminal is lower than a threshold, the source DU may send the first downlink control information to the terminal. In another example, once the source DU receives the first random access configuration and the second random access configuration of the first candidate cell, the source DU may send the first downlink control information to the terminal.

In a possible implementation, that the source DU sends the first downlink control information to the terminal includes: The source DU sends the first downlink control information to the terminal based on the second random access configuration of the first candidate cell.

In a possible implementation, that the source DU sends the first downlink control information to the terminal based on the second random access configuration of the first candidate cell includes: The source DU sends the first downlink control information to the terminal based on whether the first candidate cell has the second random access configuration. For example, when the first candidate cell has the second random access configuration, the source DU triggers, by using the first downlink control information, the terminal to initiate contention-free random access to the first candidate cell, and a dedicated resource for contention-free random access may be specified in the first downlink control information. When the first candidate cell does not have the second random access configuration, the source DU triggers, by using the first downlink control information, the terminal to initiate contention-based random access to the first candidate cell.

In another possible implementation, the method 500 further includes: The source DU receives a first neighboring cell measurement report from the terminal. That the source DU sends the first downlink control information to the terminal based on the second random access configuration includes: The source DU sends the first downlink control information to the terminal based on the second random access configuration and the first neighboring cell measurement report. For example, the source DU determines a first SSB of the first candidate cell based on the first neighboring cell measurement report, determines, based on the second random access configuration of the first candidate cell, a contention-free random access resource corresponding to the first SSB (that is, a dedicated resource corresponding to the first SSB, for example, an identifier of a random access SSB occasion mask (random access SSB occasion mask, RO mask) and a contention-free random access preamble), and then sends the first downlink control information to the terminal. The first downlink control information may include a cell group identifier of the first candidate cell, a cell identifier of the first candidate cell in a cell group, an index of the first SSB, and the contention-free random access resource corresponding to the first SSB.

Step 508: The terminal sends a random access preamble in the first candidate cell based on the first random access configuration of the first candidate cell and the first downlink control information in step 507.

If the first downlink control information does not include the indication information of the first dedicated resource, the terminal sends a contention-based random access preamble in the first candidate cell based on the first random access configuration of the first candidate cell and the first downlink control information in step 507. For example, the terminal determines, based on the first downlink control information, that the contention-based random access preamble needs to be sent to the first candidate cell, then generates the contention-based random access preamble based on the first random access configuration of the first candidate cell, and sends the generated random access preamble on a time-frequency resource indicated by the first random access configuration.

If the first downlink control information includes the indication information of the first dedicated resource, the terminal sends a contention-free random access preamble in the first candidate cell based on the first random access configuration of the first candidate cell and the first downlink control information in step 507, for example, sends a dedicated random access preamble on a dedicated time-frequency resource. The dedicated time-frequency resource and the dedicated random access preamble are determined based on the first dedicated resource.

Subsequently, the target DU may receive the random access preamble of the first candidate cell, or may fail to receive the random access preamble of the first candidate cell. The following separately describes the two cases.

Case 1: The target DU successfully receives the random access preamble of the first candidate cell.

Step 509: If the target DU receives the random access preamble of the first candidate cell, the target DU determines a TA value of the first candidate cell based on the random access preamble, where the TA value is denoted as a TA 1.

Optionally, the method 500 further includes: The target DU sends notification information to the source DU via the CU, where the notification information notifies that the target DU obtains the TA value of the first candidate cell or notifies that the target DU receives the random access preamble of the first candidate cell.

Optionally, the notification information includes the TA 1 of the first candidate cell.

Optionally, the method 500 further includes: The target DU sends the TA 1 of the first candidate cell to the terminal. For example, the target DU may send the TA 1 to the terminal through an RAR. If the terminal initiates contention-free random access, random access is completed in this step. If the terminal initiates contention-based random access, the method 500 may further include: The terminal sends a message 3 to the target DU, and the target DU sends a message 4 to the terminal. The message 3 may include second information. The second information indicates early TA value obtaining (early TA acquisition indication). In other words, the second information indicates that current random access is used to obtain the TA in advance. Certainly, the second information may alternatively be sent to the target DU in another message. This is not limited.

Optionally, the method 500 further includes: after the target DU obtains the TA 1, the target DU may start a first timer, and maintain, based on the first timer, the TA 1 to be valid. For example, the TA 1 is valid during running of the first timer, and the TA 1 is invalid when the first timer expires or stops.

Optionally, the method 500 further includes: if the first timer expires, the target DU may send first information to the source DU via the CU, where the first information indicates that the TA of the first candidate cell is invalid or is used to request the source DU to send downlink control information used to trigger the terminal to initiate random access to the first candidate cell.

Case 2: The target DU fails to receive the random access preamble of the first candidate cell.

In Case 2, because the target DU fails to receive the random access preamble of the first candidate cell, the target DU does not send notification information to the source DU via the CU.

Optionally, when the source DU receives no notification information within preset duration, and/or when the source DU receives first information, the method 500 further includes: The source DU sends second downlink control information to the terminal, where the second downlink control information is used to trigger the terminal to initiate random access to the first candidate cell. In this way, the TA value of the first candidate cell may be obtained or re-obtained.

Step 510: The source DU sends a handover command to the terminal, or the terminal receives the handover command from the source DU.

The handover command indicates the terminal to be handed over to the first candidate cell. The handover command is sent after the first downlink control information or after the TA value of the first candidate cell is obtained.

Optionally, the handover command includes the TA value of the first candidate cell.

Subsequently, after receiving the handover command, the terminal may directly use the TA value (for example, delivered in the RAR or delivered in the handover command) that is of the first candidate cell and that is obtained in advance to send uplink data, and does not need to perform random access again.

In this way, in the method 200, an obtaining occasion of the TA of the first candidate cell may be advanced to time before handover. In this way, before the terminal is handed over to the first candidate cell, a service of the terminal may be transmitted via the source DU, and after the terminal is handed over to the first candidate cell, the TA value that is of the first candidate cell and that is obtained in advance can be directly used to continue to transmit the service of the terminal, thereby avoiding service interruption.

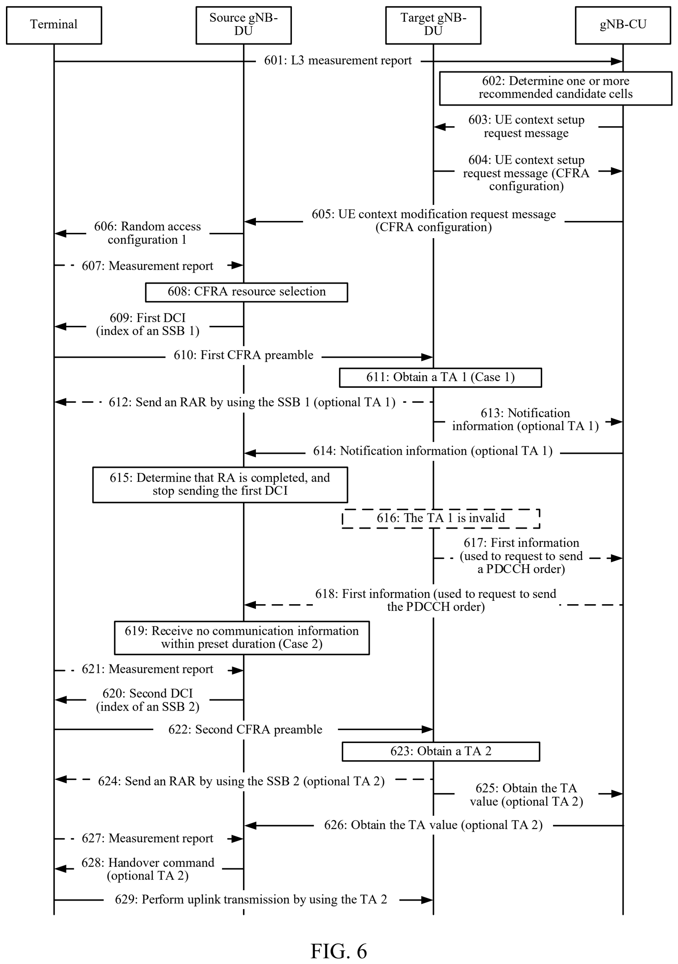

FIG. 6 shows a specific implementation of the method 500. A random access configuration 1 in FIG. 6 may correspond to the foregoing first random access configuration, a random access configuration 2 may correspond to the foregoing second random access configuration, first DCI may correspond to the first downlink control information in FIG. 5, and second DCI may correspond to the second downlink control information in FIG. 5.

In this implementation, a terminal and a target DU obtain a TA value in advance based on contention-free random access.

Step 601: A gNB-CU receives a layer 3 (layer 3, L3) measurement report from the terminal, or the terminal sends the L3 measurement report to the gNB-CU.

Step 602: The gNB-CU determines, based on the L3 measurement report reported by the terminal, to prepare for a layer 1/layer 2 triggered mobility (L1/L2 triggered mobility, LTM) configuration.

Specifically, for example, the gNB-CU may determine, based on the L3 measurement report reported by the terminal, one or more candidate cells (which may be referred to as one or more recommended candidate cells below) recommended to a target gNB-DU.

Step 603: The gNB-CU sends a UE context setup request message to the target gNB-DU, or the target gNB-DU receives the UE context setup request message from the gNB-CU.

The UE context setup request message is used to request the target gNB-DU to set up a UE context of LTM. The UE context setup request message includes identifiers of the one or more recommended candidate cells.

The one or more recommended candidate cells may include one LTM candidate primary cell and at least one LTM candidate secondary cell, or the one or more recommended candidate cells may include a plurality of candidate primary cells.

Step 604: After receiving the UE context setup request message, the target gNB-DU determines whether to accept the one or more recommended candidate cells as LTM candidate cells. If the target gNB-DU accepts the request message, the target gNB-DU sends a UE context setup response message to the gNB-CU.

The UE context setup response message includes a CFRA configuration. The CFRA configuration is a CFRA configuration of the one or more candidate cells (which may be referred to as one or more accepted candidate cells below) accepted by the target gNB-DU. The CFRA configuration includes the random access configuration 1 and the random access configuration 2, and the random access configuration 1 and the random access configuration 2 are random access configurations of a same candidate cell. The candidate cell herein may be the LTM candidate cell. It should be noted that, for some candidate cells, there may be no CFRA configuration. In other words, a part of the one or more accepted candidate cells have the CFRA configuration.

The foregoing random access configuration 1 and random access configuration 2 are described as follows:
(1) The random access configuration 1 is a common configuration for random access of a candidate cell, or the random access configuration 1 may indicate a common resource for random access of the candidate cell. That is, the random access configuration 1 is a cell-level configuration, and is a random access configuration that can be used by different terminals to initiate random access to the candidate cell. For example, the random access configuration 1 may include one or more of the following parameters: a random access preamble root sequence or indication information of a random access time-frequency resource.
(2) The random access configuration 2 is a dedicated configuration for random access of the candidate cell, or the random access configuration 2 may indicate a dedicated resource for random access of the candidate cell. The dedicated resource herein may also be understood as a CFRA resource. After a resource in the dedicated resource is allocated to a terminal, the resource is dedicated to the terminal. For example, the random access configuration 2 may include the following parameter: at least one contention-free random access preamble index. For example, the random access configuration 2 may include one or more of the following parameters: a plurality of SSB indexes (indexes) of the candidate cell or a contention-free random access preamble index corresponding to each SSB index.

It should be noted that random access configurations 1 of different candidate cells are different and random access configurations 2 of the different candidate cells are different.

It should be further noted that steps 602 to 604 may be performed for a plurality of times. For example, steps 602 to 604 may be performed for a plurality of target gNB-DUs, or steps 602 to 604 may be performed for a plurality of times for a same target gNB-DU, to select a plurality of candidate cells and random access configurations 1 and random access configurations 2 of a part or all of the plurality of candidate cells. For example, it is assumed that there are four accepted candidate cells, where a first candidate cell and a second candidate cell belong to a first target gNB-DU, a third candidate cell and a fourth candidate cell belong to a second target gNB-DU. In this case, the first target gNB-DU determines a random access configuration 1 and a random access configuration 2 of the first candidate cell, the second target gNB-DU determines a random access configuration 1 and a random access configuration 2 of the third candidate cell. The second candidate cell and the fourth candidate cell are candidate secondary cells, and have no random access configuration 1 and no random access configuration 2.

Subsequently, the target gNB-DU may initiate a process of releasing the random access configuration 2. For example, when there is no CFRA resource in the first candidate cell, the target gNB-DU may initiate a process of releasing the random access configuration 2 for the first candidate cell. Specifically, the target gNB-DU sends a release command to the gNB-CU, the gNB-CU sends the release command to a source gNB-DU, and the source gNB-DU releases the random access configuration 2 after receiving the release command. In this way, after the release command is received, because the source gNB-DU releases the random access configuration 2, the source gNB-DU does not trigger contention-free random access, for example, does not perform subsequent CFRA resource selection. Further, the source gNB-DU may trigger contention-based random access.

Step 605: The gNB-CU sends a UE context modification request message to the source gNB-DU, or the source gNB-DU receives the UE context modification request message from the gNB-CU.

The UE context modification request message includes a CFRA configuration and a cell group identifier of at least one candidate cell. For example, the UE context modification request message includes the random access configuration 1 and the random access configuration 2 of the first candidate cell, a cell group identifier corresponding to the first candidate cell, the random access configuration 1 and the random access configuration 2 of the third candidate cell, and a cell group identifier corresponding to the third candidate cell.

The cell group identifier identifies one cell group, or identifies configurations of a plurality of candidate cells. Cells in one cell group belong to one gNB-DU and cannot belong to a plurality of gNB-DUs. The cell group identifier may be allocated by the gNB-CU. For example, after receiving the UE context setup response message sent by the target gNB-DU, the gNB-CU allocates the cell group identifier to the one or more accepted candidate cells. It is assumed that there are four accepted candidate cells, where a first candidate cell and a second candidate cell belong to a first target gNB-DU, a third candidate cell and a fourth candidate cell belong to a second target gNB-DU, and the second candidate cell and the fourth candidate cell are candidate secondary cells. In this case, the gNB-CU may allocate a first cell group identifier to the first candidate cell and the second candidate cell, and allocate a second cell group identifier to the third candidate cell and the fourth candidate cell.

Step 606: The source gNB-DU sends a random access configuration 1 in the CFRA configuration of the at least one candidate cell to the terminal. For descriptions of the random access configuration 1, refer to the foregoing descriptions. A random access configuration 2 in the CFRA configuration of the at least one candidate cell is not sent to the terminal in step 606.

Step 607: The source gNB-DU receives a measurement report from the terminal, or the terminal sends the measurement report to the source gNB-DU.

The measurement report includes reference signal received power (reference signal received power, RSRP) of the one or more candidate cells of the target gNB-DU. The measurement report herein may be an L1 measurement report.

It should be noted that step 607 is an optional step.

Step 608: The source gNB-DU performs CFRA resource selection.

In a possible implementation, the source gNB-DU performs CFRA resource selection based on the measurement report in step 607. For example, the source gNB-DU performs candidate cell selection, SSB selection, and the like based on the measurement report.

In another possible implementation, if step 607 is not performed, the source gNB-DU may alternatively select any one of the one or more candidate cells, and select any SSB, to trigger random access of the SSB to the candidate cell. Optionally, the one or more candidate cells may be cells whose TA values have not been obtained by the terminal.

The following uses an example in which the source gNB-DU selects an SSB 1 of the first candidate cell.

Step 609: The source gNB-DU sends the first DCI to the terminal based on the random access configuration 2 of the first candidate cell.

The first DCI is used to trigger the terminal to initiate random access or a random access preamble in the first candidate cell. The first DCI may include one or more of the following information: a cell group identifier (that is, an identifier of a cell group to which the first candidate cell belongs), an identifier of a candidate cell in the cell group (that is, an identifier of the first candidate cell), an index of the SSB 1 of the first candidate cell, an identifier of an RO mask, or a contention-free random access preamble index corresponding to the SSB 1. The contention-free random access preamble index corresponding to the SSB 1 is determined based on the random access configuration 2 of the first candidate cell. The first DCI may be sent through a PDCCH order.

Step 610: After receiving the first DCI, the terminal may send a contention-free first random access preamble (a first CFRA preamble) to the target gNB-DU based on the random access configuration 1 in step 606 and the first DCI.

For example, the terminal determines, based on the cell group identifier and the identifier of the first candidate cell, the first candidate cell for sending the random access preamble; determines, based on the index of the SSB 1 of the first candidate cell and the identifier of the RO mask, a first time-frequency resource for sending the random access preamble; generates the first CFRA preamble based on the contention-free random access preamble index and the random access preamble root sequence in the random access configuration 1; and then sends the first CFRA preamble of the first candidate cell to the target gNB-DU on the first time-frequency resource. The first CFRA preamble may uniquely identify the terminal.

Subsequently, the target gNB-DU may receive the first CFRA preamble of the first candidate cell, or may fail to receive the first CFRA preamble of the first candidate cell. The following separately describes the two cases.

Case 1: The target gNB-DU successfully receives the first CFRA preamble of the first candidate cell.

Step 611: The target gNB-DU determines a TA value of the first candidate cell based on the first CFRA preamble, where the TA value is denoted as a TA 1. For an implementation in which the target gNB-DU determines the TA value of the first candidate cell based on the first CFRA preamble, refer to the conventional technology. Details are not described herein again.

After the target gNB-DU obtains the TA 1, the target gNB-DU needs to maintain the TA 1 to be valid. Specifically, after the target gNB-DU obtains the TA 1, the target gNB-DU may start a first timer, and determine, based on the first timer, whether the TA 1 is valid. For example, the TA 1 is valid during running of the first timer, and the TA 1 is invalid when the first timer expires or stops.

Step 612: The target gNB-DU sends an RAR to the terminal by using the SSB 1 of the first candidate cell, or the terminal receives the RAR from the target gNB-DU. Step 612 is an optional step.

The RAR includes the TA 1 of the first candidate cell. In other words, after the target gNB-DU obtains the TA 1, the target gNB-DU may provide the TA 1 for the terminal.

A receiving parameter used by the terminal to receive the RAR is the same as a receiving parameter that is of the SSB 1 of the first candidate cell and that is indicated in the first DCI. In other words, a beam used by the terminal to receive the RAR is the same as a beam that is of the SSB 1 of the first candidate cell and that is indicated in the first DCI.

Step 613: The target gNB-DU sends notification information to the gNB-CU.

The notification information indicates that the TA value of the first candidate cell is obtained or indicates that the random access preamble of the first candidate cell is received.

Optionally, the notification information includes the TA 1 of the first candidate cell. For example, when step 612 is not performed, the notification information includes the TA 1 of the first candidate cell. In other words, after the target gNB-DU obtains the TA 1, the target gNB-DU may provide the TA 1 for the CU, so that the CU further sends the TA 1 to the source gNB-DU, and the source gNB-DU includes the TA 1 in a handover command used to trigger the terminal to be handed over to the first candidate cell.

Step 614: The gNB-CU sends the notification information to the source gNB-DU. For descriptions of the notification information, refer to the foregoing descriptions. Details are not described again.

Step 615: After receiving the notification information, the source gNB-DU determines that random access is completed, and stops sending the first DCI described in step 609.

Step 616: The target gNB-DU determines that the first timer expires, that is, the TA 1 is invalid.

Step 617: When the TA 1 is invalid, the target gNB-DU sends first information to the gNB-CU, or the gNB-CU receives the first information from the target gNB-DU.

The first information indicates that the TA of the first candidate cell is invalid or is used to request to send DCI used to trigger the terminal to initiate random access to the first candidate cell. The first information includes the identifier of the first candidate cell. Optionally, the first information further includes the identifier of the cell group to which the first candidate cell belongs.

Step 618: The gNB-CU sends the first information to the source gNB-DU, or the source gNB-DU receives the first information from the gNB-CU.

After receiving the first information, the source gNB-DU may determine that the TA of the first candidate cell is invalid, and needs to resend the DCI to trigger the terminal to send the random access preamble in the first candidate cell.

It should be noted that step 616 to step 618 are optional steps.

Case 2: The target gNB-DU fails to receive the first CFRA preamble of the first candidate cell. In Case 2, because the target gNB-DU fails to receive the first CFRA preamble of the first candidate cell, the target gNB-DU does not send notification information to the source gNB-DU via the gNB-CU, where the notification information notifies that the target gNB-DU has obtained the TA value of the first candidate cell or notifies that the target gNB-DU has received the random access preamble of the first candidate cell.

Step 619: The source gNB-DU receives no notification information within preset duration.

The preset duration may be duration of a timer. The duration may be determined by the source gNB-DU, or may be determined by the target gNB-DU. The duration may be greater than or equal to a length of a time window of the RAR.

Step 620: The source gNB-DU sends second DCI to the terminal when the source gNB-DU receives the first information and/or receives no notification information within the preset duration.

The second DCI is used to trigger the terminal to initiate random access or a random access preamble in the first candidate cell. For descriptions of the second DCI, refer to the first DCI. Details are not described herein again. The random access preamble that is sent by the terminal and that is triggered by the second DCI is also a contention-free random access preamble (denoted as a second CFRA preamble), and may uniquely identify the terminal. The second CFRA preamble and the first CFRA preamble may be the same, or may be different. This is not limited.

Optionally, before step 620, step 621 may be further performed, to be specific, the source gNB-DU receives a measurement report from the terminal, or the terminal sends the measurement report to the source gNB-DU. The measurement report includes RSRP of the one or more candidate cells of the target gNB-DU. The measurement report herein may be an L1 measurement report. If step 621 is performed, in step 620, the source gNB-DU may send the second DCI to the terminal based on the measurement report. For details, refer to that the source gNB-DU sends the first DCI. Details are not described again.

Step 622: After receiving the second DCI, the terminal may send the second CFRA preamble to the target gNB-DU based on the random access configuration 1 in step 606 and the second DCI.

Step 623: The target gNB-DU determines a TA value of the first candidate cell based on the second CFRA preamble, where the TA value is denoted as a TA 2.

Step 624: The target gNB-DU sends an RAR to the terminal by using an SSB 2 of the first candidate cell, or the terminal receives the RAR from the target gNB-DU. The RAR includes the TA 2 of the first candidate cell. Step 624 is an optional step.

Step 625: The target gNB-DU sends notification information to the gNB-CU.

The notification information indicates that the TA value of the first candidate cell is obtained or indicates that the random access preamble of the first candidate cell is received. Optionally, the notification information includes the TA 1 of the first candidate cell.

Step 626: The gNB-CU sends the notification information to the source gNB-DU.

For an implementation of steps 622 to 626, refer to steps 610 to 614. Details are not described herein again.

Step 627: The source gNB-DU receives the measurement report from the terminal.

Step 628: The source gNB-DU determines, based on the measurement report, to perform LTM cell handover, and sends a handover command to the terminal.

The handover command indicates the terminal to be handed over to the first candidate cell. The handover command includes a cell group identifier of a target cell (that is, a cell group identifier of the first candidate cell) and/or a cell identifier of the target cell (that is, a cell identifier of the first candidate cell).

Optionally, the handover command may further include an uplink timing advance of the target cell (that is, the TA 2 of the first candidate cell). This is mainly for a case in which the notification information includes the TA value of the first candidate cell.

Step 629: After LTM cell handover is completed, the terminal sends uplink data to the target gNB-DU in the target cell by using the maintained timing advance (that is, the TA 2).

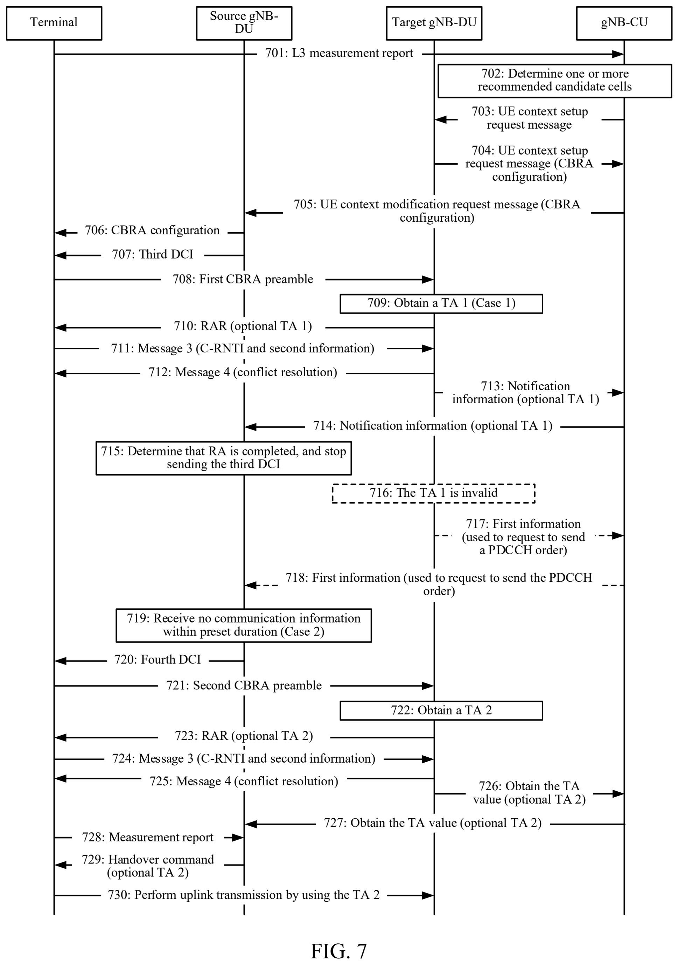

FIG. 7 shows another specific implementation of the method 500. A random access configuration 1 in FIG. 7 may correspond to the foregoing first random access configuration, a random access configuration 2 may correspond to the foregoing second random access configuration, third DCI may correspond to the first downlink control information in FIG. 5, and fourth DCI may correspond to the second downlink control information in FIG. 5.

In this implementation, a terminal and a target DU obtain a TA value in advance based on contention-based random access.

Step 701: A gNB-CU receives an L3 measurement report from the terminal, or the terminal sends the L3 measurement report to the gNB-CU.

Step 702: The gNB-CU determines, based on the L3 measurement report reported by the terminal, to prepare for an LTM configuration.

Step 703: The gNB-CU sends a UE context setup request message to the target gNB-DU, or the target gNB-DU receives the UE context setup request message from the gNB-CU.

Step 704: After receiving the UE context setup request message, the target gNB-DU determines whether to accept one or more recommended candidate cells as LTM candidate cells. If the target gNB-DU accepts the request message, the target gNB-DU sends a UE context setup response message to the gNB-CU.

The UE context setup response message includes a CBRA configuration. The CBRA configuration is a CBRA configuration of the one or more candidate cells (referred to as one or more accepted candidate cells for short below) accepted by the target gNB-DU. The CBRA configuration includes the random access configuration 1, and the random access configuration 1 is a common configuration for random access of a candidate cell, or the random access configuration 1 may indicate a common resource for random access of the candidate cell. That is, the random access configuration 1 is a cell-level configuration, and is a random access configuration that can be used by different terminals to initiate random access to the candidate cell. For example, the random access configuration 1 may include one or more of the following parameters: a random access preamble root sequence or indication information of a random access time-frequency resource.

The candidate cell herein may be the LTM candidate cell. It should be noted that, for some candidate cells, there may be no CBRA configuration. In other words, a part of the one or more accepted candidate cells have the CBRA configuration.

It should be noted that random access configurations 1 of different candidate cells are different.

For more detailed descriptions of steps 701 to 704, refer to steps 601 to 604. Details are not described herein again.

Step 705: The gNB-CU may send a UE context modification request message to a source gNB-DU, or the source gNB-DU receives the UE context modification request message from the gNB-CU.

The UE context modification request message includes a CBRA configuration and an optional cell group identifier of at least one candidate cell. For descriptions of the cell group identifier, refer to step 605. Details are not described again.

Step 706: The source gNB-DU sends the CBRA configuration (that is, the random access configuration 1) of the at least one candidate cell to the terminal.

It should be noted that the target gNB-DU may also provide the random access configuration 2 of the one or more accepted candidate cells for the gNB-CU, so that the gNB-CU may provide the random access configuration 2 of the one or more accepted candidate cells for the source gNB-DU. The random access configuration 2 is not used because contention-free random access is not initiated. For descriptions of the random access configuration 2, refer to FIG. 6. Details are not described herein again.

Step 707: The source gNB-DU sends third DCI to the terminal.

The third DCI is used to trigger the terminal to initiate random access or a random access preamble in the first candidate cell. First DCI may include the following information: a cell group identifier (that is, an identifier of a cell group to which the first candidate cell belongs) and/or an identifier of a candidate cell in the cell group (that is, an identifier of the first candidate cell). The third DCI may be sent through a PDCCH order. Optionally, the source gNB-DU may send the third DCI initiated based on the random access configuration 1.

In a possible implementation, the first candidate cell may be any one selected by the source gNB-DU from the one or more candidate cells.

In another possible implementation, before step 706, the source gNB-DU may further receive the measurement report from the terminal. In this case, the source gNB-DU may select the first candidate cell based on the measurement report.

Step 708: After receiving the third DCI, the terminal may send a contention-based first random access preamble (a first CBRA preamble) to the target gNB-DU based on the random access configuration 1 in step 706 and the third DCI.

For example, the terminal determines, based on the cell group identifier and the identifier of the first candidate cell, the first candidate cell for sending the random access preamble; generates the first CBRA preamble based on the random access preamble root sequence in the random access configuration 1; and sends the first CBRA preamble of the first candidate cell to the target gNB-DU on a time-frequency resource indicated by the random access configuration 1.

Subsequently, the target gNB-DU may receive the first CBRA preamble of the first candidate cell, or may fail to receive the first CBRA preamble of the first candidate cell. The following separately describes the two cases.

Case 1: The target gNB-DU successfully receives the first CBRA preamble of the first candidate cell.

Step 709: The target gNB-DU determines a TA value of the first candidate cell based on the first CBRA preamble, where the TA value is denoted as a TA 1. For an implementation in which the target gNB-DU determines the TA value of the first candidate cell based on the first CBRA preamble, refer to the conventional technology. Details are not described herein again.

After the target gNB-DU obtains the TA 1, the target gNB-DU needs to maintain the TA 1 to be valid. Specifically, after the target gNB-DU obtains the TA 1, the target gNB-DU may start a first timer, and determine, based on the first timer, whether the TA 1 is valid. For example, the TA 1 is valid during running of the first timer, and the TA 1 is invalid when the first timer expires or stops.

Step 710: The target gNB-DU sends an RAR to the terminal.

Optionally, the RAR includes the TA 1 of the first candidate cell.

Step 711: The terminal sends a message 3 to the target gNB-DU.

The message 3 includes a C-RNTI MAC CE and second information, and the second information indicates early TA obtaining of the LTM candidate cell (or TA obtaining before handover).

The terminal indicates to the target gNB-DU that the TA 1 is obtained before handover, and the terminal does not perform cell handover. After completing random access or receiving a message 4, the terminal continues to transmit data in a source cell. Therefore, after random access is completed, the target gNB-DU may not continue to schedule the terminal.

If the terminal does not indicate, to the target gNB-DU, that the TA 1 is obtained before handover, that is, the terminal performs cell handover, the terminal does not return to the source cell. After random access is completed, the target gNB-DU continues to schedule the terminal.

Generally, there are mainly three manners in which the base station determines that random access is completed: completing sending of the message 4, receiving an ACK feedback of the message 4, or receiving the message 3.

Step 712: The target gNB-DU sends the message 4 to the terminal, to perform conflict resolution.

Step 713: The target gNB-DU sends notification information to the gNB-CU.

The notification information indicates that the TA value of the first candidate cell is obtained or indicates that the random access preamble of the first candidate cell is received.

Optionally, the notification information includes the TA 1 of the first candidate cell. For example, when the RAR does not include the TA 1, the notification information includes the TA 1.

It should be noted that an execution sequence between step 713 and steps 711 to 712 is not limited.

Step 714: The gNB-CU sends the notification information to the source gNB-DU. For descriptions of the notification information, refer to the foregoing descriptions. Details are not described again.

Step 715: After receiving the notification information, the source gNB-DU determines that random access is completed, and stops sending the third DCI described in step 707.

Step 716: The target gNB-DU determines that the first timer expires, that is, the TA 1 is invalid.

Step 717: When the TA 1 is invalid, the target gNB-DU sends first information to the gNB-CU, or the gNB-CU receives the first information from the target gNB-DU.

The first information indicates that the TA of the first candidate cell is invalid or is used to request to send DCI used to trigger the terminal to initiate random access to the first candidate cell. The first information includes the identifier of the first candidate cell. Optionally, the first information further includes the identifier of the cell group to which the first candidate cell belongs.

Step 718: The gNB-CU sends the first information to the source gNB-DU, or the source gNB-DU receives the first information from the gNB-CU.

After receiving the first information, the source gNB-DU may determine that the TA of the first candidate cell is invalid, and needs to resend the DCI to trigger the terminal to send the random access preamble in the first candidate cell.

It should be noted that step 716 to step 718 are optional steps.

Case 2: The target gNB-DU fails to receive the first CBRA preamble of the first candidate cell. In Case 2, because the target gNB-DU fails to receive the first CBRA preamble of the first candidate cell, the target gNB-DU does not send notification information to the source gNB-DU via the gNB-CU, where the notification information notifies that the target gNB-DU has obtained the TA value of the first candidate cell or notifies that the target gNB-DU has received the random access preamble of the first candidate cell.

Step 719: The source gNB-DU receives no notification information within preset duration.

The preset duration may be duration of a timer. The duration may be determined by the source gNB-DU, or may be determined by the target gNB-DU. The duration may be greater than or equal to a length of a time window of the RAR.

Step 720: The source gNB-DU sends fourth DCI to the terminal when the source gNB-DU receives the first information and/or receives no notification information within the preset duration.

The fourth DCI is used to trigger the terminal to initiate random access or a random access preamble in the first candidate cell. For descriptions of the fourth DCI, refer to the third DCI. Details are not described herein again.

Step 721: After receiving the fourth DCI, the terminal may send a second CBRA preamble to the target gNB-DU based on the random access configuration 1 in step 706 and the fourth DCI.

Step 722: The target gNB-DU determines a TA value of the first candidate cell based on the second CBRA preamble, where the TA value is denoted as a TA 2.

Step 723: The target gNB-DU sends an RAR to the terminal.

Optionally, the RAR includes the TA 2 of the first candidate cell.

Step 724: The terminal sends a message 3 to the target gNB-DU.

The message 3 includes a C-RNTI MAC CE and second information, and the second information indicates early TA obtaining of the LTM candidate cell (or TA obtaining before handover).

Step 725: The target gNB-DU sends a message 4 to the terminal, to perform conflict resolution.

Step 726: The target gNB-DU sends notification information to the gNB-CU.

The notification information indicates that the TA value of the first candidate cell is obtained or indicates that the random access preamble of the first candidate cell is received. Optionally, the notification information includes the TA 2 of the first candidate cell.

Step 727: The gNB-CU sends the notification information to the source gNB-DU.

Step 728: The source gNB-DU receives the measurement report from the terminal.

Step 729: The source gNB-DU determines, based on the measurement report, to perform LTM cell handover, and sends the handover command to the terminal.

The handover command indicates the terminal to be handed over to the first candidate cell. The handover command includes a cell group identifier of a target cell (that is, a cell group identifier of the first candidate cell) and/or a cell identifier of the target cell (that is, a cell identifier of the first candidate cell).

Optionally, the handover command may further include an uplink timing advance of the target cell (that is, the TA 2 of the first candidate cell). This is mainly for a case in which the notification information includes the TA value of the first candidate cell.

Step 730: After LTM cell handover is completed, the terminal sends uplink data to the target gNB-DU in the target cell by using the maintained timing advance (that is, the TA 2).

This application further provides a communication method, to support obtaining of a plurality of TAs in a scenario in which one cell corresponds to a plurality of TRPs, and help avoid misjudgment of random access completion. The following describes the communication method in detail.

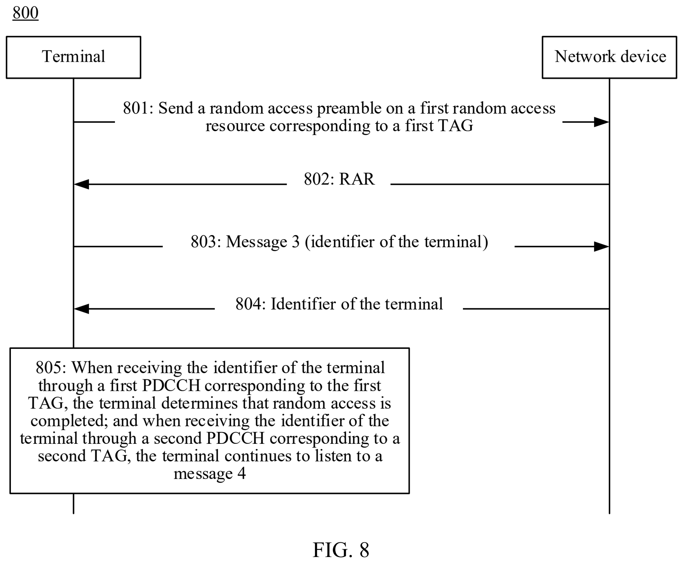

FIG. 8 is a schematic flowchart of a communication method 800 according to this application. The method shown in FIG. 8 may be performed by a terminal and a network device, or may be performed by a module or a unit in the terminal and the network device. This is not limited in this application. For ease of description, the terminal and the network device are used as unified names below.

The method 800 includes at least a part of the following content.

Step 801: The terminal sends a random access preamble to the network device on a first random access resource corresponding to a first TAG, or the network device receives the random access preamble from the terminal on the first random access resource corresponding to the first TAG.

Optionally, before step 801, the method 800 further includes: The terminal receives a configuration message from the network device, where the configuration message indicates a first PDCCH and the first random access resource that correspond to the first TAG, and a second PDCCH and a second random access resource that correspond to a second TAG. The first TAG corresponds to a first TRP, the second TAG corresponds to a second TRP, and the first TAG and the second TAG are applicable to a same cell. In other words, the cell may not only receive and send a message via the first TRP, but also may receive and send a message via the second TRP. The cell may be a primary cell or a secondary cell.

For example, the configuration message includes: a correspondence between the first random access resource and the first PDCCH, and/or a correspondence between a first SSB and the first PDCCH, where the first SSB corresponds to the first random access resource; and a correspondence between the second random access resource and the second PDCCH, and/or a correspondence between a second SSB and the second PDCCH, where the second SSB corresponds to the second random access resource.

For example, the first PDCCH includes a first CORESET pool and/or a first CSS; and/or the second PDCCH includes a second CORESET pool and/or a second CSS.

Optionally, before step 801, the method 800 further includes: The terminal receives downlink control information from the network device, or the network device sends the downlink control information to the terminal, where the downlink control information is used to trigger the terminal to initiate random access for the first TAG. In this way, after receiving the downlink control information, the terminal may send the random access preamble on the first random access resource corresponding to the first TAG.

Optionally, the downlink control information may include a cell group identifier and a cell identifier. The cell group identifier identifies one cell group (or one or more cells) or one or more cell configurations, and the cell identifier is an identifier in the cell group. Cell identifiers in different cell groups are numbered separately. In this case, cell identifiers in different cell groups may be the same. To distinguish this scenario, the DCI needs to carry the cell group identifier.

Optionally, the downlink control information may further include at least one of the following information: an identifier of the first TAG, an index of the first PDCCH, or an identifier of an SSB corresponding to the first PDCCH.

Step 802: The network device sends an RAR to the terminal, or the terminal receives the RAR from the network device.

A PDCCH used by the network device to send the RAR is not limited in this application. In other words, the PDCCH used by the network device to send the RAR may be the first PDCCH corresponding to the first TAG, or may be the second PDCCH corresponding to the second TAG.

Step 803: The terminal sends a message 3 to the network device, or the network device receives the message 3 from the terminal.

The message 3 includes an identifier of the terminal, for example, a C-RNTI of the terminal. It should be noted that the terminal may send the message 3 via a TRP 1, and may send the message 3 via a TRP 2. This is not limited in this application.

Step 804: The network device sends a message including the identifier of the terminal to the terminal, or the terminal receives, from the network device, the message including the identifier of the terminal.

Step 805: When the terminal receives, through the first PDCCH corresponding to the first TAG, the message including the identifier of the terminal, the terminal determines that random access is completed; and when the terminal receives, through the second PDCCH corresponding to the second TAG, the message including the identifier of the terminal, the terminal continues to listen to a message 4, until the terminal receives, through the first PDCCH corresponding to the first TAG, the message including the identifier of the terminal or a contention resolution timer expires.

In other words, the terminal considers that random access for the first TAG ends only when receiving, on the first PDDCH corresponding to the first TAG, the message including the identifier of the terminal, and does not consider that random access for the first TAG ends when receiving, on another PDCCH, the message including the identifier of the terminal, and therefore continues to listen to the message 4.

Optionally, when the terminal has completed random access for the second TAG, the method 800 further includes: when random access of the terminal for the first TAG fails, the terminal skips initiating a re-establishment process.

It should be noted that, in FIG. 8, random access for the first TAG is used as an example. For random access for the second TAG, the terminal considers that random access for the second TAG ends only when receiving, on the second PDDCH corresponding to the second TAG, the message including the identifier of the terminal, and does not consider that random access for the second TAG ends when receiving, on another PDCCH (for example, the first PDCCH), the message including the identifier of the terminal, and therefore continues to listen to the message 4.

In this way, in the method 800, different PDCCHs carrying C-RNTIs are distinguished, to avoid misjudgment of random access completion.

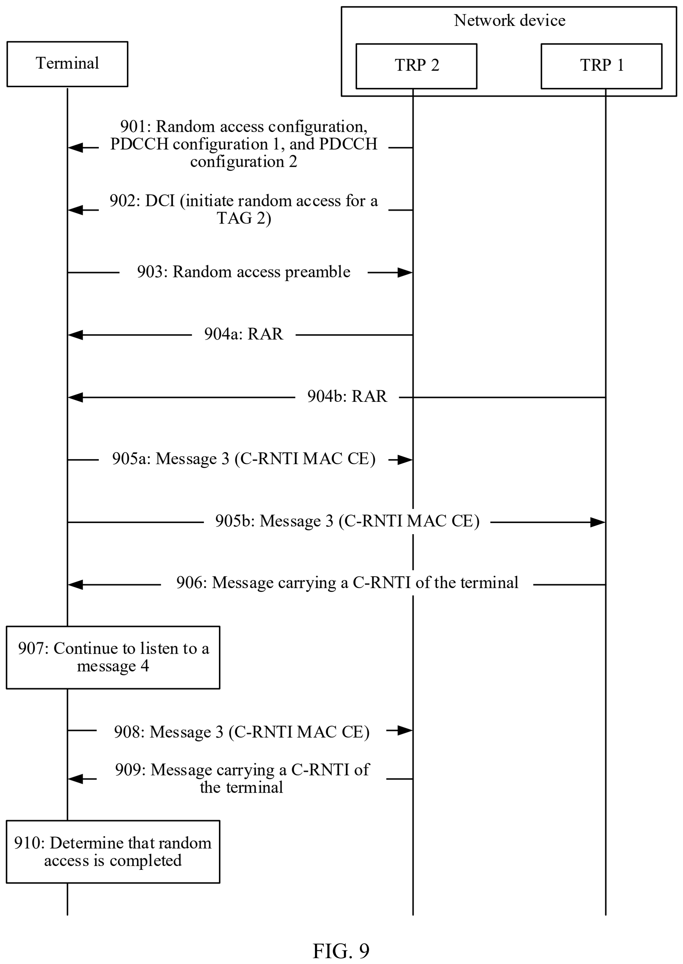

FIG. 9 shows a specific implementation of the method 800. A TAG 1 in FIG. 9 may correspond to the foregoing second TAG, and a TAG 2 may correspond to the foregoing first TAG. In FIG. 9, an example in which one cell corresponds to two TRPs is used.

Step 901: A terminal receives a random access configuration, a PDCCH configuration 1, and a PDCCH configuration 2 from a network device, or the network device sends the random access configuration, the PDCCH configuration 1, and the PDCCH configuration 2 to the terminal.

The random access configuration includes indication information of a time-frequency resource for random access. Optionally, the random access configuration may further include a random access preamble configuration. Different random access configurations correspond to different time-frequency resources and/or random access preambles.

The PDCCH configuration 1 may be a configuration of a PDCCH 1 corresponding to initial access, and is used to configure a PDCCH resource 1, and the PDCCH configuration 2 may be a configuration of a PDCCH 2 corresponding to an access process after initial access, and is used to configure a PDCCH resource 2. The PDCCH resource 1 and the PDCCH resource 2 may have respective and unique identifiers, for example, PDCCH resource indexes. For example, a cell 1 corresponds to a TRP 1 and a TRP 2, the TRP 1 corresponds to the TAG 1, and the TRP 2 corresponds to the TAG 2. The terminal completes access for the TAG 1 through the PDCCH configuration 1. After completing access for the TAG 1, the terminal may complete access for the TAG 2 through the PDCCH configuration 2.

In a possible implementation, the PDCCH configuration 1 is used to configure a first CORESET pool (CORESET pool), and the PDCCH configuration 2 is used to configure a second CORESET pool (CORESET pool). In other words, the PDCCH resource 1 is the first CORESET pool, and the PDCCH resource 2 is the second CORESET pool. Each CORESET pool includes at least one CORESET. The CORESET is a control resource set, and is used to transmit DCI or a PDCCH.

In another possible implementation, the PDCCH configuration 1 is used to configure a first CSS, and the PDCCH configuration 2 is used to configure a second CSS. In other words, the PDCCH resource 1 is the first CSS, the PDCCH resource 2 is the second CSS, and the first CSS and the second CSS may correspond to a same CORESET pool.

In a first implementation, the random access configuration includes a random access configuration A and a random access configuration B, where the random access configuration A corresponds to the PDCCH configuration 1, the random access configuration B corresponds to the PDCCH configuration 2, the PDCCH configuration 1 corresponds to the TAG 1, the PDCCH configuration 2 corresponds to the TAG 2, and the TAG 1 and the TAG 2 are applicable to a same serving cell. The serving cell herein may be a primary cell, or may be a secondary cell. The TAG 1 corresponds to the TRP 1, and the TAG 2 corresponds to the TRP 2. In this implementation, there is a correspondence between different PDCCH configurations and different random access configurations, and the correspondence may be directly or indirectly indicated by the network device to the terminal. For example, the direct indication manner may be that an index of the PDCCH resource is carried in the random access configuration. For another example, the indirect indication manner may be performing correspondence according to a sequence number of the random access configuration and a sequence number of the PDCCH resource. For example, the random access configuration A with a sequence number 1 corresponds to the PDCCH resource 1 with a sequence number 1, and the random access configuration B with a sequence number 2 corresponds to the PDCCH resource 2 with a sequence number 2.

In another possible implementation, the random access configuration is a common configuration, that is, may correspond to the PDCCH configuration 1, and may correspond to the PDCCH configuration 2. In this case, there is a correspondence between different SSBs and different PDCCH configurations, and the correspondence may be directly indicated by the network device to the terminal. For example, an SSB 1 to an SSB 10 correspond to the PDCCH configuration 1, an SSB 11 to an SSB 20 correspond to the PDCCH configuration 2, and the SSB 1 to the SSB 10 and the SSB 11 to the SSB 20 may correspond to a same PCI, or may correspond to different PCIs. When the different PCIs are corresponded, the different PCIs may belong to one serving cell, or may belong to different serving cells.

It should be noted that a delivery occasion of the random access configuration A and the PDCCH configuration B is not limited in this application. For example, the random access configuration A and the PDCCH configuration B may be delivered to the terminal at the same time as the random access configuration A and the PDCCH configuration 1, or may be delivered to the terminal after the terminal accesses the TAG 1 that corresponds to the random access configuration A and the PDCCH configuration 1.

Step 902: The terminal receives DCI from the network device.

The DCI indicates the terminal to initiate random access for the TAG 2. Herein, it is assumed that random access for the TAG 1 has been completed.

The DCI may include a cell group identifier and a cell identifier. The cell group identifier identifies one cell group (or one or more cells) or one or more cell configurations, and the cell identifier is an identifier in the cell group. Cell identifiers in different cell groups are numbered separately. In this case, cell identifiers in different cell groups may be the same. To distinguish this scenario, the DCI needs to carry the cell group identifier.

Optionally, the DCI may further include at least one of the following information: an identifier of the TAG 2, an index of the PDCCH resource 2, or an identifier of an SSB corresponding to the PDCCH resource 2. In other words, the DCI may directly indicate related information of the TAG 2. If the DCI does not carry the related information of the TAG 2, in a possible manner, the network device may alternatively indirectly indicate the TAG 2 by delivering the DCI on the PDCCH resource 2.

Step 903: The terminal sends, based on the DCI, a random access preamble to the network device on a time-frequency resource indicated by the random access configuration B corresponding to the TAG 2.

The random access preamble is a CBRA preamble.

For example, the terminal sends the random access preamble to the network device on the time-frequency resource in the random access configuration B.

Step 904: After receiving the random access preamble, the network device sends an RAR.

Optionally, the network device determines, based on the configuration mentioned in step 901, that the random access preamble corresponds to the PDCCH resource 2, and then sends the RAR through the PDCCH resource 2.

It should be noted that a PDCCH resource used by the network device to send the RAR is not limited in this application. In other words, the PDCCH resource used by the network device to send the RAR may be the PDCCH resource 2 corresponding to the TAG 2, as shown in step 904a, and may be the PDCCH resource 1 corresponding to the TAG 1, as shown in step 904b.

Step 905: The terminal sends a message 3 to the network device.

The message 3 includes a C-RNTI MAC CE, and a C-RNTI indicated by the C-RNTI MAC CE identifies the terminal. It should be noted that the terminal may send the message 3 via the TRP 1, as shown in step 905b, and may send the message 3 via the TRP 2, as shown in step 905a. This is not limited in this application.

Step 906: The network device sends, to the terminal through the PDCCH resource 1 corresponding to the TAG 1, a message carrying a C-RNTI, or the terminal receives, on the PDCCH resource 1 corresponding to the TAG 1, the message carrying the C-RNTI.

The C-RNTI in the message is the same as the C-RNTI indicated by the C-RNTI MAC CE in the message 3. The message may be a UL grant (that is, used to allocate a PUSCH resource) or DL assignment (that is, used to allocate a downlink PDSCH resource).

Step 907: The terminal continues to listen to a message 4.

Because the message received by the terminal is received through the PDCCH resource 1 corresponding to the TAG 1, even if the message carries the C-RNTI of the terminal, the terminal does not consider that the message is the message 4, that is, random access is not completed, and continues to listen to the message 4, until the message including the C-RNTI of the terminal is received through the PDCCH resource 1 corresponding to the TAG 1 or a contention resolution timer expires.

Step 908: If the terminal does not receive the message 4 within time duration, the terminal resends a message 3 to the network device.

The message 3 includes a C-RNTI MAC CE, and a C-RNTI indicated by the C-RNTI MAC CE identifies the terminal. It should be noted that the terminal may send the message 3 via the TRP 1, and may send the message 3 via the TRP 2. This is not limited in this application. In step 908, for example, the message 3 is sent via the TRP 2.

Step 909: The network device successfully receives the message 3, and sends, to the terminal through the PDCCH resource 2 corresponding to the TAG 2, a message carrying a C-RNTI, or the terminal receives, on the PDCCH resource 2 corresponding to the TAG 2, the message carrying the C-RNTI.

The C-RNTI in the message is the same as the C-RNTI indicated by the C-RNTI MAC CE in the message 3. The message may be a UL grant (that is, used to allocate a PUSCH resource) or DL assignment (that is, used to allocate a downlink PDSCH resource).

910: The terminal determines that random access is completed.

For example, after receiving the message in step 909, the terminal determines, based on the C-RNTI in the message, that the message is the message 4. In addition, because the message is received on the PDCCH resource 2 corresponding to the TAG 2, the terminal determines that random access for the TAG 2 is completed.

In addition, it should be noted that, when random access is initiated for the primary cell and random access of the terminal for the TAG 2 fails (for example, a quantity of random access times reaches a maximum quantity), because the terminal has performed access for the TAG 1, a re-establishment process may not be triggered for failure of random access for the TAG 2, and a random access problem is not indicated to an RRC layer, or whether to trigger a re-establishment process is determined according to an indication of the network device. In addition, when the terminal performs initial access for the TAG 1, if random access of the terminal for the TAG 1 fails, a re-establishment process for the TAG 1 may be triggered.

It should be noted that steps 906 to 908 are optional steps. After step 905 is performed, the network device may successfully receive the message 3, and send, to the terminal through the PDCCH resource 2 corresponding to the TAG 2, the message carrying the C-RNTI, that is, may directly perform steps 909 and 910.

It should be noted that the foregoing embodiments may be independently implemented, or may be implemented together in a proper manner. This is not limited in this application. The method shown in FIG. 5 may be combined with the method shown in FIG. 8 for implementation.

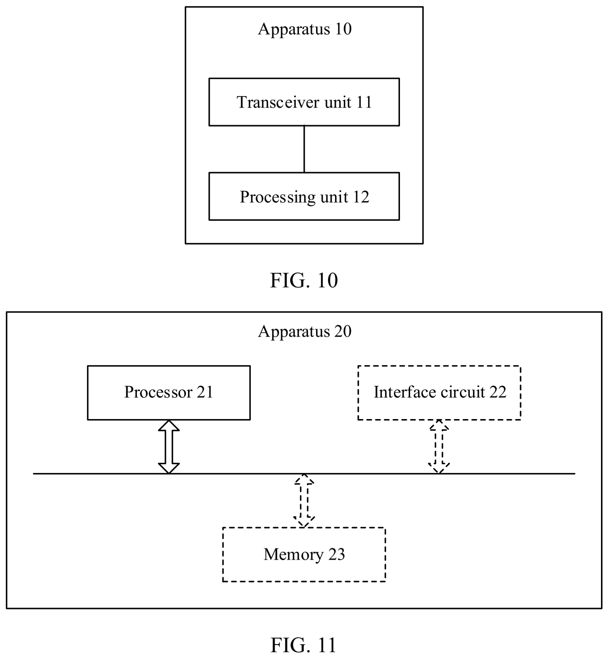

The foregoing describes in detail the method provided in this application with reference to FIG. 5 to FIG. 9. The following describes in detail apparatus embodiments of this application with reference to FIG. 10 and FIG. 11.

It may be understood that, to implement functions in the foregoing embodiments, an apparatus in FIG. 10 or FIG. 11 includes a corresponding hardware structure and/or software module for performing each function. These apparatuses may be configured to implement functions of the source DU, the target DU, the CU, the terminal, or the network device in the foregoing method embodiments, and therefore can also implement beneficial effect of the foregoing method embodiments. A person skilled in the art should be easily aware that, in combination with the units and the method steps in the examples described in embodiments disclosed in this application, this application can be implemented by using hardware or a combination of hardware and computer software.

FIG. 10 is a diagram of a structure of an apparatus according to an embodiment of this application.

As shown in FIG. 10, an apparatus 10 includes a transceiver unit 11 and a processing unit 12.

When the apparatus 10 is configured to implement a function of the source DU in the foregoing method embodiment, the transceiver unit 11 is configured to: receive a first random access configuration and a second random access configuration of a first candidate cell from a CU, where the first random access configuration indicates a common resource for random access of the first candidate cell, and the second random access configuration indicates a dedicated resource for random access of the first candidate cell; send the first random access configuration to a terminal; send first downlink control information to the terminal based on the second random access configuration, where the first downlink control information is used to trigger the terminal to initiate random access to the first candidate cell; and send a handover command to the terminal after sending the first downlink control information, where the handover command indicates the terminal o be handed over to the first candidate cell, and the first candidate cell is a cell of a target DU.

Optionally, the transceiver unit 11 is further configured to: when the source DU receives no notification information from the CU within preset duration, and/or when the source DU receives first information from the CU, send second downlink control information to the terminal, where the notification information notifies that a TA of the first candidate cell is obtained or notifies that a random access preamble of the first candidate cell is received; the first information indicates that the TA of the first candidate cell is invalid, or the first information is used to request to send the second downlink control information; and the second downlink control information is used to trigger the terminal to initiate random access to the first candidate cell.

Optionally, the transceiver unit 11 is further configured to receive notification information from the CU, where the notification information indicates that a TA of the first candidate cell is obtained or notifies that a random access preamble of the first candidate cell is received.

Optionally, the notification information includes the TA value of the first candidate cell.

Optionally, the handover command includes the TA value of the first candidate cell.

Optionally, the transceiver unit 11 is further configured to receive a first neighboring cell measurement report from the terminal; and the transceiver unit 11 is specifically configured to send the first downlink control information to the terminal based on the second random access configuration and the first neighboring cell measurement report.

Optionally, the first downlink control information includes an identifier of a cell group to which the first candidate cell belongs and an identifier of the first candidate cell in the cell group.

Optionally, the first downlink control information further includes indication information of a first dedicated resource in the dedicated resource.

When the apparatus 10 is configured to implement a function of the target DU in the foregoing method embodiment, the transceiver unit 11 is configured to: receive an identifier of a first candidate cell from a CU, where the first candidate cell is a cell of the target DU; send a first random access configuration and a second random access configuration of the first candidate cell to the CU, where the first random access configuration indicates a common resource for random access of the first candidate cell, and the second random access configuration indicates a dedicated resource for random access of the first candidate cell; and receive a random access preamble from a terminal in the first candidate cell. The processing unit 12 is configured to determine a TA value of the first candidate cell based on the random access preamble.

Optionally, the transceiver unit 11 is further configured to send notification information to the CU, where the notification information notifies that the TA value of the first candidate cell is obtained or notifies that the random access preamble of the first candidate cell is received.

Optionally, the notification information includes the TA value of the first candidate cell.

Optionally, the transceiver unit 11 is further configured to send the TA value of the first candidate cell to the terminal.

Optionally, the transceiver unit 11 is further configured to: when a timer used to control the TA value of the first candidate cell to be valid expires, send first information to the CU, where the first information indicates that the TA of the first candidate cell is invalid or is used to request to send second downlink control information, and the second downlink control information is used to trigger the terminal to initiate random access to the first candidate cell.

Optionally, the transceiver unit 11 is further configured to receive second information from the terminal, where the second information indicates to obtain the TA value of the first candidate cell in advance.

When the apparatus 10 is configured to implement a function of the CU in the foregoing method embodiment, the transceiver unit 11 is configured to receive a second neighboring cell measurement report from a terminal. The processing unit 12 is configured to determine a first candidate cell based on the second neighboring cell measurement report. The transceiver unit 11 is further configured to: send an identifier of the first candidate cell to a target DU; receive a first random access configuration and a second random access configuration of the first candidate cell from the target DU, where the first random access configuration indicates a common resource for random access of the first candidate cell, and the second random access configuration indicates a dedicated resource for random access of the first candidate cell; and send the first random access configuration and the second random access configuration of the first candidate cell to a source DU.

Optionally, the transceiver unit 11 is further configured to: receive notification information from the target DU, where the notification information notifies that a TA value of the first candidate cell is obtained or notifies that a random access preamble of the first candidate cell is received; and send the notification information to the source DU.

Optionally, the notification information includes the TA value of the first candidate cell.

Optionally, the transceiver unit 11 is further configured to: receive first information from the target DU, where the first information indicates that the TA of the first candidate cell is invalid or is used to request to send second downlink control information, and the second downlink control information is used to trigger the terminal to initiate random access to the first candidate cell; and send the first information to the source DU.

When the apparatus 10 is configured to implement a function of the terminal in the foregoing method embodiment, in a possible implementation, the transceiver unit 11 is configured to: receive a first random access configuration of a first candidate cell from a source DU, where the first random access configuration indicates a common resource for random access of the first candidate cell; receive first downlink control information from the source DU, where the first downlink control information is used to trigger the terminal to initiate random access to the first candidate cell, and the first downlink control information includes an identifier of a cell group to which the first candidate cell belongs and an identifier of the first candidate cell in the cell group; send a random access preamble in the first candidate cell based on the first random access configuration and the first downlink control information; receive a TA value of the first candidate cell; and receive a handover command from the source DU, where the handover command indicates the terminal to be handed over to the first candidate cell, and the first candidate cell is a cell of a target DU. In a possible implementation, the transceiver unit 11 is configured to: receive a first random access configuration of a first candidate cell from a source DU, where the first random access configuration indicates a common resource for random access of the first candidate cell; receive first downlink control information from the source DU, where the first downlink control information is used to trigger the terminal to initiate random access to the first candidate cell, and the first downlink control information includes an identifier of a cell group to which the first candidate cell belongs and an identifier of the first candidate cell in the cell group; send a random access preamble in the first candidate cell based on the first random access configuration and the first downlink control information; and receive a handover command of the source DU, where the handover command indicates the terminal to be handed over to the first candidate cell, the handover command includes a TA value of the first candidate cell, and the first candidate cell is a cell of a target DU.

Optionally, the transceiver unit 11 is specifically configured to receive a random access response message from the target DU, where the random access response message includes the TA value of the first candidate cell.

Optionally, the first downlink control information further includes indication information of a first dedicated resource in a dedicated resource for random access of the first candidate cell.

Optionally, the transceiver unit 11 is further configured to send second information to the target DU, where the second information indicates to obtain the TA value of the first candidate cell in advance.

When the apparatus 10 is configured to implement a function of the terminal in the foregoing method embodiment, in another possible implementation, the transceiver unit 11 is configured to: send a random access preamble to a network device on a first random access resource corresponding to a first TAG; receive a random access response message from the network device; and send a message 3 to the network device, where the message 3 includes an identifier of the terminal. The processing unit 12 is configured to:
when the terminal receives the identifier through a first PDCCH corresponding to the first TAG, determine that random access is completed; and when the terminal receives the identifier through a second PDCCH corresponding to a second TAG, continue to monitor a message 4, where the first TAG and the second TAG are applicable to a same cell.

Optionally, when the terminal has completed random access for the second TAG, the processing unit 12 is further configured to: when random access of the terminal for the first TAG fails, skip initiating a re-establishment process.

Optionally, the transceiver unit 11 is further configured to receive a configuration message from the network device, where the configuration message indicates the first PDCCH and the first random access resource that correspond to the first TAG, and the second PDCCH and a second random access resource that correspond to the second TAG.

Optionally, the configuration message includes: a correspondence between the first random access resource and the first PDCCH, and/or a correspondence between a first SSB and the first PDCCH, where the first SSB corresponds to the first random access resource; and a correspondence between the second random access resource and the second PDCCH, and/or a correspondence between a second SSB and the second PDCCH, where the second SSB corresponds to the second random access resource.

Optionally, the first PDCCH includes a first CORESET pool and/or a first CSS; and/or the second PDCCH includes a second CORESET pool and/or a second CSS.

When the apparatus 10 is configured to implement a function of the network device in the foregoing method embodiment, the transceiver unit 11 is configured to: receive a random access preamble from a terminal on a first random access resource corresponding to a first TAG; send a random access response message to the terminal; receive a message 3 from the terminal, where the message 3 includes an identifier of the terminal; and send the identifier on a first PDCCH corresponding to the first TAG.

Optionally, the transceiver unit 11 is further configured to send a configuration message to the terminal, where the configuration message indicates the first PDCCH and the first random access resource that correspond to the first TAG, and a second PDCCH and a second random access resource that correspond to a second TAG, and the first TAG and the second TAG are applicable to a same cell.

Optionally, the configuration message includes: a correspondence between the first random access resource and the first PDCCH, and/or a correspondence between a first SSB and the first PDCCH, where the first SSB corresponds to the first random access resource; and a correspondence between the second random access resource and the second PDCCH, and/or a correspondence between a second SSB and the second PDCCH, where the second SSB corresponds to the second random access resource.

Optionally, the first PDCCH includes a first CORESET pool and/or a first CSS; and/or the second PDCCH includes a second CORESET pool and/or a second CSS.

For more detailed descriptions of the transceiver unit 11 and the processing unit 12, refer to related descriptions in the foregoing method embodiments. Details are not described herein again.

FIG. 11 is a diagram of another structure of an apparatus according to an embodiment of this application.

As shown in FIG. 11, an apparatus 20 includes a processor 21. The processor 21 is coupled to a memory 23, and the memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip applied to the source DU, the target DU, the CU, the terminal, or the network device, the chip implements a function of the source DU, the target DU, the CU, the terminal, or the network device in the foregoing method embodiments. The chip receives information from another module in the source DU, the target DU, the CU, the terminal, or the network device, where the information is sent by another apparatus to the source DU, the target DU, the CU, the terminal, or the network device; or the chip sends information to another module in the source DU, the target DU, the CU, the terminal, or the network device, where the information is sent by the source DU, the target DU, the CU, the terminal, or the network device to the another apparatus.

This application further provides an apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. Optionally, there are one or more processors. Optionally, the apparatus further includes the memory. Optionally, there are one or more memories. Optionally, the memory and the processor are integrated together or disposed separately.

This application further provides a computer-readable storage medium, where the computer-readable storage medium stores computer instructions used to implement the method performed by the source DU, the target DU, the CU, the terminal, or the network device in the foregoing method embodiments.

This application further provides a computer program product, including instructions. When the instructions are executed by a computer, the method performed by the source DU, the target DU, the CU, the terminal, or the network device in the foregoing method embodiments is implemented.

This application further provides a communication system. The communication system includes the source DU, the target DU, the CU, the terminal, or the network device in the foregoing embodiments.

For explanations and beneficial effect of related content in any one of the apparatuses provided above, refer to the corresponding method embodiments provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the source DU, the target DU, the CU, the terminal, or the network device. Certainly, the processor and the storage medium may exist in the source DU, the target DU, the CU, the terminal, or the network device as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a source distributed unit DU, a first random access configuration and a second random access configuration of a first candidate cell from a central unit CU, wherein the first random access configuration indicates a common resource for random access of the first candidate cell, and the second random access configuration indicates a dedicated resource for random access of the first candidate cell;
sending, by the source DU, the first random access configuration to a terminal;
sending, by the source DU, first downlink control information to the terminal based on the second random access configuration, wherein the first downlink control information is used to trigger the terminal to initiate random access to the first candidate cell; and
sending, by the source DU, a handover command to the terminal after sending the first downlink control information, wherein the handover command indicates the terminal to be handed over to the first candidate cell, and the first candidate cell is a cell of a target DU.

2. The method according to claim 1, wherein the method further comprises:
when the source DU receives no notification information from the CU within preset duration, and/or when the source DU receives first information from the CU, sending, by the source DU, second downlink control information to the terminal, wherein
the notification information notifies that a timing advance TA of the first candidate cell is obtained or notifies that a random access preamble of the first candidate cell is received; the first information indicates that the timing advance TA of the first candidate cell is invalid, or the first information is used to request to send the second downlink control information; and the second downlink control information is used to trigger the terminal to initiate random access to the first candidate cell.

3. The method according to claim 1 or 2, wherein the method further comprises:
receiving, by the source DU, notification information from the CU, wherein the notification information indicates that a timing advance TA of the first candidate cell is obtained or notifies that a random access preamble of the first candidate cell is received.

4. The method according to claim 2 or 3, wherein
the notification information comprises the TA value of the first candidate cell, and the handover command comprises the TA value of the first candidate cell.

5. The method according to any one of claims 1 to 4, wherein
the method further comprises: receiving, by the source DU, a first neighboring cell measurement report from the terminal; and
sending, by the source DU, the first downlink control information to the terminal based on the second random access configuration comprises: sending, by the source DU, the first downlink control information to the terminal based on the second random access configuration and the first neighboring cell measurement report.

6. The method according to any one of claims 1 to 5, wherein
the first downlink control information comprises an identifier of a cell group to which the first candidate cell belongs and an identifier of the first candidate cell in the cell group.

7. The method according to claim 6, wherein
the first downlink control information further comprises indication information of a first dedicated resource in the dedicated resource.

8. A communication method, wherein the method comprises:
receiving, by a target distributed unit DU, an identifier of a first candidate cell from a central unit CU, wherein the first candidate cell is a cell of the target DU;
sending, by the target DU, a first random access configuration and a second random access configuration of the first candidate cell to the CU, wherein the first random access configuration indicates a common resource for random access of the first candidate cell, and the second random access configuration indicates a dedicated resource for random access of the first candidate cell;
receiving, by the target DU, a random access preamble from a terminal in the first candidate cell; and
determining, by the target DU, a timing advance TA value of the first candidate cell based on the random access preamble.

9. The method according to claim 8, wherein the method further comprises:
sending, by the target DU, notification information to the CU, wherein the notification information notifies that the TA value of the first candidate cell is obtained or notifies that the random access preamble of the first candidate cell is received.

10. The method according to claim 9, wherein
the notification information comprises the TA value of the first candidate cell.

11. The method according to any one of claims 8 to 10, wherein the method further comprises:
sending, by the target DU, the TA value of the first candidate cell to the terminal.

12. The method according to any one of claims 8 to 11, wherein the method further comprises:
when a timer used to control the TA value of the first candidate cell to be valid expires, sending, by the target DU, first information to the CU, wherein the first information indicates that the TA of the first candidate cell is invalid or is used to request to send second downlink control information, and the second downlink control information is used to trigger the terminal to initiate random access to the first candidate cell.

13. The method according to any one of claims 8 to 12, wherein the method further comprises:
receiving, by the target DU, second information from the terminal, wherein the second information indicates to obtain the TA value of the first candidate cell in advance.

14. A communication method, wherein the method comprises:
receiving, by a central unit CU, a second neighboring cell measurement report from a terminal;
determining, by the CU, a first candidate cell based on the second neighboring cell measurement report;
sending, by the CU, an identifier of the first candidate cell to a target distributed unit DU;
receiving, by the CU, a first random access configuration and a second random access configuration of the first candidate cell from the target DU, wherein the first random access configuration indicates a common resource for random access of the first candidate cell, and the second random access configuration indicates a dedicated resource for random access of the first candidate cell; and
sending, by the CU, the first random access configuration and the second random access configuration of the first candidate cell to a source DU.

15. The method according to claim 14, wherein the method further comprises:
receiving, by the CU, notification information from the target DU, wherein the notification information notifies that a timing advance TA value of the first candidate cell is obtained or notifies that a random access preamble of the first candidate cell is received; and
sending, by the CU, the notification information to the source DU.

16. The method according to claim 15, wherein
the notification information comprises the TA value of the first candidate cell.

17. The method according to any one of claims 14 to 16, wherein the method further comprises:
receiving, by the CU, first information from the target DU, wherein the first information indicates that the timing advance TA of the first candidate cell is invalid or is used to request to send second downlink control information, and the second downlink control information is used to trigger the terminal to initiate random access to the first candidate cell; and
sending, by the CU, the first information to the source DU.

18. A communication method, wherein the method comprises:
receiving, by a terminal, a first random access configuration of a first candidate cell from a source distributed unit DU, wherein the first random access configuration indicates a common resource for random access of the first candidate cell;
receiving, by the terminal, first downlink control information from the source DU, wherein the first downlink control information is used to trigger the terminal to initiate random access to the first candidate cell, and the first downlink control information comprises an identifier of a cell group to which the first candidate cell belongs and an identifier of the first candidate cell in the cell group;
sending, by the terminal, a random access preamble in the first candidate cell based on the first random access configuration and the first downlink control information;
receiving, by the terminal, a timing advance TA value of the first candidate cell; and
receiving, by the terminal, a handover command from the source DU, wherein the handover command indicates the terminal to be handed over to the first candidate cell, and the first candidate cell is a cell of a target DU.

19. The method according to claim 18, wherein receiving, by the terminal, the timing advance TA value of the first candidate cell comprises:
receiving, by the terminal, a random access response message from the target DU, wherein the random access response message comprises the TA value of the first candidate cell.

20. The method according to claim 18 or 19, wherein
the first downlink control information further comprises indication information of a first dedicated resource in a dedicated resource for random access of the first candidate cell.

21. The method according to claim 20, wherein the method further comprises:
sending, by the terminal, second information to the target DU, wherein the second information indicates to obtain the TA value of the first candidate cell in advance.

22. A communication method, wherein the method comprises:
receiving, by a terminal, a first random access configuration of a first candidate cell from a source distributed unit DU, wherein the first random access configuration indicates a common resource for random access of the first candidate cell;
receiving, by the terminal, first downlink control information from the source DU, wherein the first downlink control information is used to trigger the terminal to initiate random access to the first candidate cell, and the first downlink control information comprises an identifier of a cell group to which the first candidate cell belongs and an identifier of the first candidate cell in the cell group;
sending, by the terminal, a random access preamble in the first candidate cell based on the first random access configuration and the first downlink control information; and
receiving, by the terminal, a handover command of the source DU, wherein the handover command indicates the terminal to be handed over to the first candidate cell, the handover command comprises a TA value of the first candidate cell, and the first candidate cell is a cell of a target DU.

23. The method according to claim 22, wherein
the first downlink control information further comprises indication information of a first dedicated resource in a dedicated resource for random access of the first candidate cell.

24. The method according to claim 23, wherein the method further comprises:
sending, by the terminal, second information to the target DU, wherein the second information indicates to obtain the TA value of the first candidate cell in advance.

25. A communication method, wherein the method comprises:
sending, by a terminal, a random access preamble to a network device on a first random access resource corresponding to a first timing advance group TAG;
receiving, by the terminal, a random access response message from the network device;
sending, by the terminal, a message 3 to the network device, wherein the message 3 comprises an identifier of the terminal;
when the terminal receives the identifier through a first physical downlink control channel PDCCH corresponding to the first TAG, determining, by the terminal, that random access is completed; and
when the terminal receives the identifier through a second PDCCH corresponding to a second TAG, continuing, by the terminal, to monitor a message 4, wherein
the first TAG and the second TAG are applicable to a same cell.

26. The method according to claim 25, wherein when the terminal has completed random access for the second TAG, the method further comprises:
when random access of the terminal for the first TAG fails, skipping, by the terminal, initiating a re-establishment process.

27. The method according to claim 25 or 26, wherein the method further comprises:
receiving, by the terminal, a configuration message from the network device, wherein the configuration message indicates the first PDCCH and the first random access resource that correspond to the first TAG, and the second PDCCH and a second random access resource that correspond to the second TAG.

28. The method according to claim 27, wherein the configuration message comprises: a correspondence between the first random access resource and the first PDCCH, and/or a correspondence between a first synchronization signal/physical broadcast channel block SSB and the first PDCCH, wherein the first SSB corresponds to the first random access resource; and a correspondence between the second random access resource and the second PDCCH, and/or a correspondence between a second SSB and the second PDCCH, wherein the second SSB corresponds to the second random access resource.

29. The method according to any one of claims 25 to 28, wherein
the first PDCCH comprises a first control resource set CORESET pool and/or a first common search space CSS; and/or
the second PDCCH comprises a second CORESET pool and/or a second CSS.

30. A communication method, wherein the method comprises:
receiving, by a network device, a random access preamble from a terminal on a first random access resource corresponding to a first timing advance group TAG;
sending, by the network device, a random access response message to the terminal;
receiving, by the network device, a message 3 from the terminal, wherein the message 3 comprises an identifier of the terminal; and
sending, by the network device, the identifier on a first physical downlink control channel PDCCH corresponding to the first TAG.

31. The method according to claim 30, wherein the method further comprises:
sending, by the network device, a configuration message to the terminal, wherein the configuration message indicates the first PDCCH and the first random access resource that correspond to the first TAG, and a second PDCCH and a second random access resource that correspond to a second TAG, and the first TAG and the second TAG are applicable to a same cell.

32. The method according to claim 31, wherein the configuration message comprises: a correspondence between the first random access resource and the first PDCCH, and/or a correspondence between a first synchronization signal/physical broadcast channel block SSB and the first PDCCH, wherein the first SSB corresponds to the first random access resource; and a correspondence between the second random access resource and the second PDCCH, and/or a correspondence between a second SSB and the second PDCCH, wherein the second SSB corresponds to the second random access resource.

33. The method according to any one of claims 30 to 32, wherein
the first PDCCH comprises a first control resource set CORESET pool and/or a first common search space CSS; and/or
the second PDCCH comprises a second CORESET pool and/or a second CSS.

34. A communication apparatus, comprising a module or a unit configured to perform the methods according to any one of claims 1 to 33.

35. A communication apparatus, comprising:
a processor, configured to execute a computer program stored in a memory, to enable the apparatus to perform the methods according to any one of claims 1 to 33.

36. The apparatus according to claim 35, wherein the apparatus further comprises the memory.

37. The apparatus according to claim 35 or 36, wherein the apparatus is a chip.

38. A computer-readable storage medium, wherein the computer-readable storage medium stores a computer program, and when the computer program is run on a computer, the computer is enabled to perform the methods according to any one of claims 1 to 33.

39. A computer program product, wherein the computer program product comprises instructions used to perform the methods according to any one of claims 1 to 33.

40. A communication system, comprising any one or more of the following:
a source distributed unit DU configured to perform the method according to any one of claims 1 to 7;
a target DU configured to perform the method according to any one of claims 8 to 13;
a central unit CU configured to perform the method according to any one of claims 14 to 17; and
a terminal configured to perform the method according to any one of claims 18 to 24.

41. A communication system, comprising any one or more of the following:
a terminal configured to perform the method according to any one of claims 25 to 29; and
a network device configured to perform the method according to any one of claims 30 to 333.
